# EUROPEAN PATENT APPLICATION

(11) **EP 3 496 374 A1**
(43) Date of publication of application: **12.06.2019**
(21) Application number: 16917370.5
(22) Date of filing: 30.09.2016
(51) Int. Cl.: H04L 29/12

(54) **IP ADDRESS ALLOCATION METHOD AND DEVICE**

(71) Applicant: Huawei Technologies Co., Ltd., Longgang District Shenzhen, Guangdong 518129 (CN)
(72) Inventor: LI, Yan, Shenzhen Guangdong 518129 (CN); LI, Yongcui, Shenzhen Guangdong 518129 (CN)
(74) Representative: Pfenning, Meinig & Partner mbB
(86) International application number: PCT/CN2016/101286
(87) International publication number: WO 2018/058620

(57) **Abstract**

An IP address assignment method and an apparatus are provided, to resolve a problem in the prior art that a control plane network element cannot determine, in an IP address assignment process, a terminal device to which IP address information is to be assigned. In the method, after determining an identifier of a terminal device, a core network control plane network element in a mobile communications network assigns IP address information to the terminal device corresponding to the identifier of the terminal device. In this way, after assigning the IP address information, the core network control plane network element can determine a correspondence between the IP address information and the identifier of the terminal device. Therefore, the core network control plane network element can accurately assign an IP address to the terminal device, and can further perform policy control based on the IP address of the terminal device, so that the terminal device can access an external data network.

## Description

### TECHNICAL FIELD

This application relates to the field of communications technologies, and in particular, to an IP address assignment method and an apparatus.

### BACKGROUND

A mobile communications network includes two parts: an access network and a core network. The access network, for example, an evolved universal terrestrial radio access network (Evolved Universal Terrestrial Radio Access Network, E-UTRAN), is responsible for connecting terminal devices to the core network, to implement a connection between the terminal devices and the network. The core network, for example, an evolved packet core (Evolved Packet Core, EPC), is responsible for connecting terminal devices to different networks based on call requests or data requests sent by the terminal devices by using the access network, and is responsible for charging, mobility management, and the like.

The core network mainly includes the following several key logical network elements: a mobility management entity (Mobility Management Entity, MME), a serving gateway (Serving Gateway S-GW) and a packet data network gateway (Packet Data Network Gateway, P-GW), a home subscriber server (Home Subscriber Service, HSS) and a policy and charging rule function (Policy and charging rule function, PCRF).

In the core network, core network devices may be divided into a control plane (Control Plane, CP) network element and a user plane (User Plane, UP) network element based on logical functions of the core network devices. The control plane network element is a network element responsible for mobility management, or forwarding path management, and Internet Protocol (Internet Protocol, IP) address assignment in a mobile network, and may be an MME, an S-GW, or a P-GW, may be an S-GW control plane or a P-GW control plane, or may be a control plane network element integrated by using any network element of an MME, an S-GW, and a P-GW, or a control plane network element integrated by using an S-GW control plane and a P-GW control plane. The user plane network element is mainly responsible for forwarding of a service packet of a terminal device, and may be a physical forwarding plane device such as an S-GW, a P-GW, a router, a switch, or a software defined network (Software Defined Network, SDN) virtual machine (switch), or may be a virtual forwarding plane network element such as an S-GW forwarding plane or a P-GW forwarding plane.

When a terminal device accesses the mobile communications network, the control plane network element may assign, to the terminal device based on the Dynamic Host Configuration Protocol (Dynamic Host Configuration Protocol, DHCP) or the Neighbor Discovery Protocol (Neighbor Discovery Protocol, NDP), a piece of unassigned IP address information. The IP address information may include a subnet prefix in an Internet Protocol version 4 (Internet Protocol version 4, IPv4) address or an Internet Protocol version 6 (Internet Protocol version 6, IPv6) address. It is well-known that an IP address is an important basis for data transmission of a terminal device. However, it can be learned based on the foregoing descriptions that, when the control plane network element assigns IP address information, the control plane network element cannot determine a terminal device to which the IP address information is to be assigned. Consequently, the core network control plane network element cannot correctly assign an IP address to the terminal device. Further, the core network control plane network element cannot correctly perform policy control based on the IP address of the terminal device, such as packet forwarding policy control or quality of service (quality of service, QoS) control. More importantly, without the IP address, the terminal device cannot access an external data network.

### SUMMARY

Embodiments of the present invention provide an IP address assignment method and an apparatus, to resolve a problem in the prior art that a control plane network element cannot determine, in an IP address information assignment process, a terminal device to which IP address information is to be assigned.

Specific technical solutions provided in the present invention are as follows:
According to a first aspect, an embodiment of the present invention provides an IP address assignment method. The method is applied to an access device in a mobile communications network. The method includes: first, determining, by the access device, an identifier of a terminal device; then, sending, by the access device after receiving an address assignment request packet sent by the terminal device, the address assignment request packet and the identifier of the terminal device to a core network control plane network element, so that the core network control plane network element assigns IP address information based on the identifier of the terminal device; and finally, receiving, by the access device, an address assignment response packet sent by the core network control plane network element after the core network control plane network element assigns the IP address information to the terminal device, and sending the address assignment response packet to the terminal device, where the address assignment response packet includes the IP address information.

According to the foregoing method, the access device in the mobile communications network may determine the identifier of the terminal device, and after obtaining the address assignment request packet sent by the terminal device, send both the address assignment request packet and the identifier of the terminal device to the core network control plane network element, so that the core network control plane network element assigns the IP address information to the terminal device corresponding to the identifier of the terminal device. In this way, after assigning the IP address information, the core network control plane network element can determine a correspondence between the IP address information and the identifier of the terminal device. Therefore, the core network control plane network element can accurately assign an IP address to the terminal device, and can further perform policy control based on the IP address of the terminal device, so that the terminal device can access an external data network.

In a possible design, the access device receives the identifier of the terminal device from the core network control plane network element, to determine the identifier of the terminal device.

In a possible design, the access device receives the identifier of the terminal device from the core network control plane network element in a session establishment process or an attach process of the terminal device. In this way, the access device can accurately obtain the identifier of the terminal device after the core network control plane network element determines the identifier of the terminal device.

In a possible design, the address assignment request packet is a Dynamic Host Configuration Protocol DHCP obtaining request packet or a router solicitation RS packet; and
the address assignment response packet is a DHCP obtaining response packet or a router advertisement RA packet.

In this way, the IP address assignment method may be applicable to a mobile communications network in which an IP address is assigned by using the DHCP or the NDP.

In a possible design, the access device may send the address assignment request packet and the identifier of the terminal device to the core network control plane network element in the following two manners:
Manner 1: The access device encapsulates the identifier of the terminal device into the address assignment request packet, and forwards, by using a core network user plane network element, the address assignment request packet obtained after encapsulation to the core network control plane network element.
Manner 2: The access device encapsulates the address assignment request packet and the identifier of the terminal device into core network uplink control signaling, and sends the core network uplink control signaling to the core network control plane network element.

In the mobile communications network, the access device cannot directly forward the address assignment request packet on a user plane to the core network control plane network element. Therefore, in the foregoing two manners, the access device can successfully send the address assignment request packet and the identifier of the terminal device to the core network control plane network element.

In a possible design, the access device may receive the address assignment response packet from the core network control plane network element in the following two manners:
Manner 1: The access device receives the address assignment response packet forwarded by the core network control plane network element by using a core network user plane network element.
Manner 2: The access device receives core network downlink control signaling from the core network control plane network element, where the core network downlink control signaling carries the address assignment response packet.

In the mobile communications network, the access device cannot directly receive a message on a user plane that is sent by the core network control plane network element. Therefore, in the foregoing two manners, the access device can successfully receive the address assignment response packet sent by the core network control plane network element.

In a possible design, the access device further sends tunnel information and/or a network identifier to the core network control plane network element. The tunnel information is information about a tunnel that is between the access device and a core network user plane network element and that serves the terminal device, and the network identifier is an identifier of a network that the terminal device requests to access.

The sending, by the access device, the address assignment response packet to the terminal device includes:
sending, by the access device, the address assignment response packet to the terminal device based on at least one or a combination of the following included in the address assignment response packet: the identifier of the terminal device, the tunnel information, and the network identifier.

In this way, the core network control plane network element can determine the tunnel information and/or the network identifier.

In a possible design, the core network control plane network element includes a session management function module. In this case, the access device further needs to send an identifier of the session management function module to the core network control plane network element.

In this way, the access device can accurately send the foregoing related information to a session management function module corresponding to the identifier of the session management function module.

In a possible design, before the access device receives the address assignment request packet from the terminal device, the access device receives an indication message sent by the core network control plane network element; and
the access device sends a subsequently received packet to the core network control plane network element based on the indication message, where the packet includes the address assignment request packet.

In this way, the access device can send the received address assignment request packet to the core network control plane network element based on the indication message.

In a possible design, the access device may send a subsequently received packet to the core network control plane network element; or detect a subsequently received packet, and when determining that the received packet is an address assignment request packet, send the packet to the core network control plane network element.

In a possible design, the access device may further receive a stopping indication message sent by the core network control plane network element, and stop sending a received packet to the core network control plane network element.

According to a second aspect, an embodiment of the present invention provides an IP address assignment method. The method is applied to a core network control plane network element in a mobile communications network. The method includes: assigning, by the core network control plane network element, IP address information to a terminal device after receiving an address assignment request packet and an identifier of the terminal device from an access device; and sending, to the access device, an address assignment response packet carrying the IP address information.

According to the foregoing method, after receiving the identifier of the terminal device and the address assignment request packet that are sent by the access device, the core network control plane network element assigns the IP address information to the terminal device corresponding to the identifier of the terminal device. In this way, after assigning the IP address information, the core network control plane network element can determine a correspondence between the IP address information and the identifier of the terminal device. Therefore, the core network control plane network element can accurately assign an IP address to the terminal device, and can further perform policy control based on the IP address of the terminal device, so that the terminal device can access an external data network.

In a possible design, before receiving the address assignment request packet and the identifier of the terminal device from the access device, the core network control plane network element sends the identifier of the terminal device to the access device, so that the access device can determine the identifier of the terminal device.

In a possible design, the core network control plane network element sends the identifier of the terminal device to the access device in a session establishment process or an attach process of the terminal device. In this way, the access device obtains the identifier of the terminal device, and then may send, after receiving the address assignment request packet sent by the terminal device, the address assignment request packet and the identifier of the terminal device to the core network control plane network element together.

In a possible design, the address assignment request packet is a Dynamic Host Configuration Protocol DHCP obtaining request packet or a router solicitation RS packet; and
the address assignment response packet is a DHCP obtaining response packet or a router advertisement RA packet.

In this way, the IP address assignment method may be applicable to a mobile communications network in which an IP address is assigned by using the DHCP or the NDP.

In a possible design, the core network control plane network element may receive the address assignment request packet and the identifier of the terminal device from the access device in the following two manners:
Manner 1: The core network control plane network element receives an address assignment request packet that is obtained after encapsulation and that is forwarded by the access device by using a core network user plane network element, where the address assignment request packet obtained after encapsulation includes the identifier of the terminal device.
Manner 2: The core network control plane network element receives core network uplink control signaling from the access device, where the core network uplink control signaling includes the address assignment request packet and the identifier of the terminal device.

In the mobile communications network, because the core network control plane network element cannot directly receive a message on a user plane from the access device. Therefore, in the foregoing two manners, the core network control plane network element can receive the address assignment request packet and the identifier of the terminal device that are sent by the access device.

In a possible design, the core network control plane network element may send the address assignment response packet to the access device in the following two manners:
Manner 1: The core network control plane network element forwards the address assignment response packet to the access device by using a core network user plane network element.
Manner 2: The core network control plane network element encapsulates the address assignment response packet into core network downlink control signaling, and sends the core network downlink control signaling to the access device.

In the mobile communications network, the core network control plane network element cannot directly forward the address assignment response packet to the access device. Therefore, in the foregoing two manners, the core network control plane network element can successfully send the address assignment response packet to the access device.

In a possible design, the address assignment response packet further includes the identifier of the terminal device, so that after receiving the address assignment response packet, the access device forwards the address assignment response packet to the terminal device based on the identifier of the terminal device.

In a possible design, the core network control plane network element further receives tunnel information and/or a network identifier from the access device. The tunnel information is information about a tunnel that is between the access device and a core network user plane network element and that serves the terminal device, and the network identifier is an identifier of a network that the terminal device requests to access.

The address assignment response packet further includes the tunnel information and/or the network identifier sent by the access device.

In this way, after receiving the address assignment response packet, the access device forwards the address assignment response packet to the terminal device based on the tunnel information and/or the network identifier.

In a possible design, the core network control plane network element includes a session management function module. The core network control plane network element further needs to receive an identifier of the session management function module from the access device.

In this way, the core network control plane network element determines a session management function module corresponding to the identifier of the session management function module, and then assigns the IP address information to the terminal device.

In a possible design, before receiving the address assignment request packet and the identifier of the terminal device, the core network control plane network element sends an indication message to the access device, where the indication message is used to instruct the access device to send a subsequently received packet to the core network control plane network element, and the packet includes the address assignment request packet. In this way, the access device can send the received address assignment request packet to the core network control plane network element based on the indication message.

In a possible design, the core network control plane network element further sends a stopping indication message to the access device, for example, adds the stopping indication message to the address assignment response packet. In this way, the access device can stop sending a received packet to the core network control plane network element.

According to a third aspect, an embodiment of the present invention further provides an IP address assignment method. The method is applied to a core network control plane network element in a mobile communications network. The method includes: assigning, by the core network control plane network element, IP address information to a terminal device after determining an identifier of the terminal device; and sending an address assignment response packet and the identifier of the terminal device to an access device serving the terminal device, where the address assignment response packet includes the IP address information.

According to the foregoing method, after determining an identifier of a terminal device, the core network control plane network element assigns the IP address information to the terminal device corresponding to the identifier of the terminal device. In this way, after assigning the IP address information, the core network control plane network element can determine a correspondence between the IP address information and the identifier of the terminal device. Therefore, the core network control plane network element can accurately assign an IP address to the terminal device, and can further perform policy control based on the IP address of the terminal device, so that the terminal device can access an external data network.

In a possible design, the core network control plane network element sends, to the access device, context information of the terminal device that carries the identifier of the terminal device, so that the access device accurately sends the address assignment response packet to the terminal device based on the identifier of the terminal device.

In a possible design, the context information further includes any one or a combination of the following: the IP address information, tunnel information, and a network identifier. The tunnel information is information about a tunnel that is between the access device and a core network user plane network element and that serves the terminal device, and the network identifier is an identifier of a network that the terminal device requests to access.

In a possible design, the core network control plane network element sends the address assignment response packet to the access device in the following two manners:
Manner 1: The core network control plane network element forwards the address assignment response packet to the access device by using a core network user plane network element.
Manner 2: The core network control plane network element encapsulates the address assignment response packet into core network downlink control signaling, and sends the core network downlink control signaling to the access device.

In the mobile communications network, the core network control plane network element cannot directly forward the address assignment response packet to the access device. Therefore, in the foregoing two manners, the core network control plane network element can successfully send the address assignment response packet to the access device.

In a possible design, the address assignment response packet includes at least one or a combination of the following: the identifier of the terminal device, tunnel information, and a network identifier. The tunnel information is information about a tunnel that is between the access device and a core network user plane network element and that serves the terminal device, and the network identifier is an identifier of a network that the terminal device requests to access.

In a possible design, the core network control plane network element includes a session management function module.

According to a fourth aspect, an embodiment of the present invention further provides an IP address assignment method. The method is applied to an access device in a mobile communications network. The method includes: sending, by the access device after receiving an address assignment response packet and an identifier of a terminal device from a core network control plane network element, the address assignment response packet to the terminal device based on the identifier of the terminal device, where the address assignment response packet includes IP address information assigned by the core network control plane network element to the terminal device corresponding to the identifier of the terminal device.

According to the foregoing method, after receiving the address assignment response packet and the identifier of the terminal device that are sent by the core network control plane network element, the access device sends the address assignment response packet to the terminal device based on the identifier of the terminal device, where the address assignment response packet includes the IP address information assigned by the core network control plane network element to the terminal device. In this way, the access device can accurately send the IP address information of the terminal device to the terminal device, thereby improving efficiency of assigning an IP address to the terminal device.

In a possible design, the access device receives, from the core network control plane network element, context information of the terminal device that carries the identifier of the terminal device. In this way, the access device can accurately send the address assignment response packet to the terminal device based on the identifier of the terminal device.

In a possible design, the context information of the terminal device further includes any one or a combination of the following: the IP address information, tunnel information, and a network identifier. The tunnel information is information about a tunnel that is between the access device and a core network user plane network element and that serves the terminal device, and the network identifier is an identifier of a network that the terminal device requests to access.

In a possible design, the access device receives the address assignment response packet from the core network control plane network element in the following two manners:
Manner 1: The access device receives the address assignment response packet forwarded by the core network control plane network element by using a core network user plane network element.
Manner 2: The access device receives core network downlink control signaling from the core network control plane network element, where the core network downlink control signaling carries the address assignment response packet.

In the foregoing two manners, the access device can successfully receive the address assignment response packet on a user plane that is sent by the core network control plane network element.

In a possible design, the address assignment response packet includes at least one or a combination of the following: the identifier of the terminal device, tunnel information, and a network identifier. The tunnel information is information about a tunnel that is between the access device and a core network user plane network element and that serves the terminal device, and the network identifier is an identifier of a network that the terminal device requests to access.

In a possible design, the core network control plane network element includes a session management function module.

According to a fifth aspect, an embodiment of the present invention further provides an access device. The access device has a function of implementing behavior of the access device in the first aspect. The function may be implemented by hardware, or may be implemented by hardware executing corresponding software. The hardware or software includes one or more modules corresponding to the foregoing function.

In a possible design, a structure of the access device includes a processing unit, a receiving unit, and a sending unit. These units can perform corresponding functions in the foregoing method example. For details, refer to the detailed descriptions in the method example, and details are not described herein again.

In a possible design, a structure of the access device includes a transceiver, a processor, a bus, and a memory. The transceiver is configured to communicate and interact with another device in a mobile communications network, and the processor is configured to support the access device in performing corresponding functions in the foregoing methods. The memory is coupled to the processor, and stores program instructions and data essential to the access device.

According to a sixth aspect, an embodiment of the present invention further provides a core network control plane network element. The core network control plane network element has a function of implementing behavior of the core network control plane network element in the second aspect. The function may be implemented by hardware, or may be implemented by hardware executing corresponding software. The hardware or software includes one or more modules corresponding to the foregoing function.

In a possible design, a structure of the core network control plane network element includes a receiving unit, a processing unit, and a sending unit. These units can perform corresponding functions in the foregoing method example. For details, refer to the detailed descriptions in the method example, and details are not described herein again.

In a possible design, a structure of the core network control plane network element includes an interface, a processor, a bus, and a memory. The interface is configured to communicate and interact with another device in a mobile communications network, and the processor is configured to support the core network control plane network element in performing corresponding functions in the foregoing methods. The memory is coupled to the processor, and stores program instructions and data essential to the core network control plane network element.

According to a seventh aspect, an embodiment of the present invention further provides another core network control plane network element. The core network control plane network element has a function of implementing behavior of the core network control plane network element in the third aspect. The function may be implemented by hardware, or may be implemented by hardware executing corresponding software. The hardware or software includes one or more modules corresponding to the foregoing function.

In a possible design, a structure of the core network control plane network element includes a processing unit and a sending unit. These units can perform corresponding functions in the foregoing method examples. For details, refer to the detailed descriptions in the method examples, and details are not described herein again.

In a possible design, a structure of the core network control plane network element includes an interface, a processor, a bus, and a memory. The interface is configured to communicate and interact with another device in a mobile communications network, and the processor is configured to support the core network control plane network element in performing corresponding functions in the foregoing methods. The memory is coupled to the processor, and stores program instructions and data essential to the core network control plane network element.

According to an eighth aspect, an embodiment of the present invention further provides an access device. The access device has a function of implementing behavior of the access device in the fourth aspect. The function may be implemented by hardware, or may be implemented by hardware executing corresponding software. The hardware or software includes one or more modules corresponding to the foregoing function.

In a possible design, a structure of the access device includes a processing unit, a receiving unit, and a sending unit. These units can perform corresponding functions in the foregoing method examples. For details, refer to the detailed descriptions in the method examples, and details are not described herein again.

In a possible design, a structure of the access device includes a transceiver, a processor, a bus, and a memory. The transceiver is configured to communicate and interact with another device in a mobile communications network, and the processor is configured to support the access device in performing corresponding functions in the foregoing methods. The memory is coupled to the processor, and stores program instructions and data essential to the access device.

According to a ninth aspect, an embodiment of the present invention further provides a mobile communications network system. The mobile communications network system includes a terminal device and a core network control plane network element.

According to the solution provided in this embodiment of the present invention, after determining an identifier of the terminal device, the core network control plane network element in the mobile communications network assigns IP address information to the terminal device corresponding to the identifier of the terminal device. In this way, after assigning the IP address information, the core network control plane network element can determine a correspondence between the IP address information and the identifier of the terminal device. Therefore, the core network control plane network element can accurately assign an IP address to the terminal device, and can further perform policy control based on the IP address of the terminal device, so that the terminal device can access an external data network.

### BRIEF DESCRIPTION OF DRAWINGS

FIG. 1 is a schematic diagram of a mobile communications network architecture according to an embodiment of this application;
FIG. 2 is a schematic diagram of another mobile communications network architecture according to an embodiment of this application;
FIG. 2A is a schematic network connection diagram of a mobile communications network according to an embodiment of this application;
FIG. 2B is a schematic network connection diagram of another mobile communications network according to an embodiment of this application;
FIG. 3 is a flowchart of an IP address assignment method according to an embodiment of this application;
FIG. 4 is a flowchart of a first IP address assignment example according to an embodiment of this application;
FIG. 5 is a flowchart of a second IP address assignment example according to an embodiment of this application;
FIG. 6 is a flowchart of a third IP address assignment example according to an embodiment of this application;
FIG. 7 is a flowchart of a fourth IP address assignment example according to an embodiment of this application;
FIG. 8 is a flowchart of a fifth IP address assignment example according to an embodiment of this application;
FIG. 9 is a flowchart of a sixth IP address assignment example according to an embodiment of this application;
FIG. 10 is a flowchart of another IP address assignment method according to an embodiment of this application;
FIG. 11 is a flowchart of a seventh IP address assignment example according to an embodiment of this application;
FIG. 12 is a flowchart of an eighth IP address assignment example according to an embodiment of this application;
FIG. 13 is a flowchart of a ninth IP address assignment example according to an embodiment of this application;

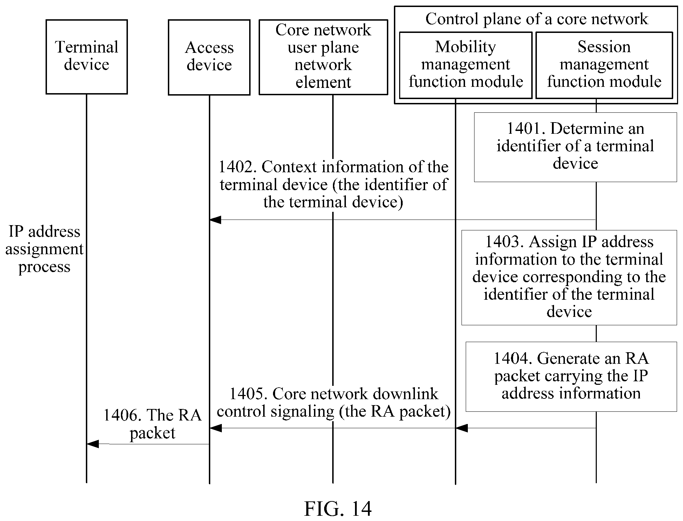

FIG. 14 is a flowchart of a tenth IP address assignment example according to an embodiment of this application;
FIG. 15 is a schematic structural diagram of an access device according to an embodiment of this application;
FIG. 16 is a schematic structural diagram of a core network control plane network element according to an embodiment of this application;
FIG. 17 is a schematic structural diagram of another core network control plane network element according to an embodiment of this application;
FIG. 18 is a schematic structural diagram of another access device according to an embodiment of this application;
FIG. 19 is a structural diagram of an access device according to an embodiment of this application;
FIG. 20 is a structural diagram of a core network control plane network element according to an embodiment of this application;
FIG. 21 is a structural diagram of another core network control plane network element according to an embodiment of this application; and
FIG. 22 is a structural diagram of another access device according to an embodiment of this application.

### DESCRIPTION OF EMBODIMENTS

To make the objectives, technical solutions, and advantages of the present invention clearer, the following further describes the present invention in detail with reference to the accompanying drawings. Apparently, the described embodiments are merely some rather than all of the embodiments of the present invention. All other embodiments obtained by a person of ordinary skill in the art based on the embodiments of the present invention without creative efforts shall fall within the protection scope of the present invention.

The embodiments of the present invention provide an IP address assignment method and an apparatus, to resolve a problem in the prior art that a control plane network element cannot determine, in an IP address information assignment process, a terminal device to which IP address information is to be assigned. The method and the apparatus are conceived based on a same invention concept. The method and the apparatus have similar principles for resolving the problem. Therefore, for implementation of the apparatus and the method, refer to each other, and details of repeated parts are not described.

According to the technical solutions in the embodiments of the present invention, after determining an identifier of a terminal device, a core network control plane network element in a mobile communications network assigns IP address information to the terminal device corresponding to the identifier of the terminal device. In this way, after assigning the IP address information, the core network control plane network element can determine a correspondence between the IP address information and the identifier of the terminal device. Therefore, the core network control plane network element can accurately assign an IP address to the terminal device, and can further perform policy control based on the IP address of the terminal device, so that the terminal device can access an external data network.

In the following, some terms in this application are described, so as to help a person skilled in the art have a better understanding.
(1) The core network control plane network element used in the embodiments of the present invention is a network element responsible for mobility management, forwarding path management, and IP address assignment in the mobile communications network, and may be, but not limited to, an MME, an S-GW, a P-GW, a router, or the like in a core network, may be an S-GW control plane or a P-GW control plane, or may be a control plane network element integrated by using any network element of an MME, an S-GW, a P-GW, and a router, or a control plane network element integrated by using an S-GW control plane, a P-GW control plane, or a router control plane.
(2) A core network user plane network element used in the embodiments of the present invention, also referred to as a core network forwarding plane network element, is a network element responsible for providing a service packet forwarding function for the terminal device, and may be, but not limited to, a physical forwarding plane device such as an S-GW, a P-GW, a router, a switch, or an SDN switch, or may be a virtual forwarding plane network element such as an S-GW forwarding plane or a P-GW forwarding plane.
(3) A data network (Data Network, DN) used in the embodiments of the present invention is a network that the terminal device is finally to establish a connection to and is to access, and may be, but not limited to, a packet data network (Packet Data Network, PDN) such as the Internet (Internet), a virtual private network (Virtual Private Network, VPN), or an IP multi-media service (IP Multi-media Service, IMS) network, a Wireless Application Protocol (Wireless Application Protocol, WAP) network provided by an operator, or the like.
(4) An access device used in the embodiments of the present invention is a device providing a wireless access service for the terminal device, and includes, but is not limited to, a base station (Base Station, BS), an evolved NodeB (evolved NodeB, eNB), a radio network controller (radio network controller, RNC), a NodeB (NodeB, NB), a base station controller (Base Station Controller, BSC), a base transceiver station (Base Transceiver Station, BTS), a home NodeB (for example, Home evolved NodeB, or Home NodeB, HNB), a baseband unit (BaseBand Unit, BBU), an access point (Access Point, AP), a wireless fidelity access point (Wireless Fidelity Access Point, Wi-Fi AP), a Worldwide Interoperability for Microwave Access (Worldwide Interoperability for Microwave Access, WiMAX) BS, or the like.
(5) The terminal device used in the present invention, also referred to as user equipment (User Equipment, UE), is a device providing data connectivity for a user, such as a handheld device, an in-vehicle device, a wearable device, a computing device, or a mobile station (Mobile Station, MS) having a wireless connection function, another processing device connected to a wireless modem, or a mobile terminal communicating with one or more core networks by using an access network.
(6) The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.
(7) In descriptions of this application, words such as "first" and "second" are merely intended for purposes of description, and should not be understood as indicating or implying relative importance or a sequence.

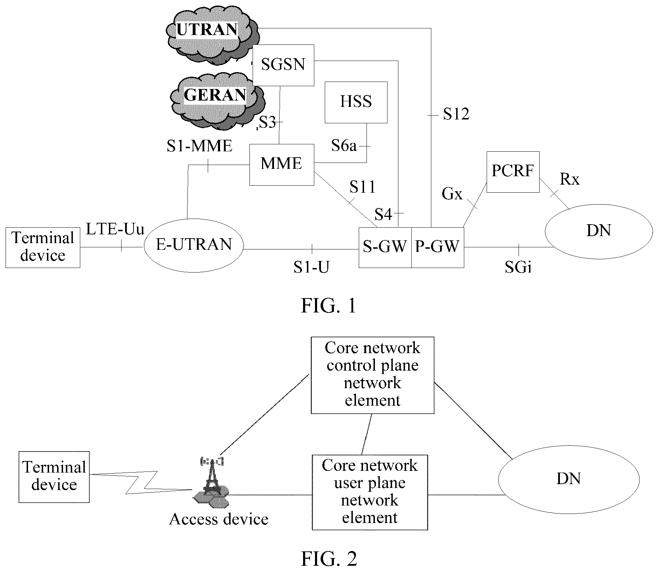

FIG. 1 shows a possible mobile communications network architecture, that is, an evolved packet system (Evolved Packet System, EPS) architecture, to which an IP address assignment method provided in the embodiments of the present invention is applicable. The EPS architecture is divided into two parts: an access network and a core network.

The access network may be an evolved E-UTRAN, and provides, for a terminal device, a service related to wireless access. The access network includes an access device, and the access device includes, but is not limited to, an eNodeB, a Wi-Fi AP, a WiMAX BS, and other devices.

The core network is an EPC. The EPC mainly includes the following several key logical network elements: an MME, an S-GW, a P-GW, an HSS, and a PCRF. The network elements are specifically described below.

The MME mainly completes processing of a signaling plane function, such as user authentication, switch, mobility management of a terminal in an idle state, and user context and bearer management.

The HSS is configured to store subscription information of a user.

The S-GW is configured to: route and forward a network data, and provide a function related to lawful interception.

The P-GW is a gateway connected to an external data network, is a user plane anchor between a 3rd Generation Partnership Project (3rd Generation Partnership Project, 3GPP) access network and a non-3GPP access network, and is responsible for functions such as user address assignment, policy control, execution of a charging rule, and lawful interception. The S-GW and the P-GW may be deployed in a same physical device or in different physical devices. The embodiments of the present invention are not limited thereto.

The PCRF provides a policy and charging rule.

When accessing the external data network DN, a terminal device may be connected to the core network by using the access network, assign an IP address to the terminal device by using a device in the core network, and send the IP address to the terminal device. In this way, the terminal device can implement data transmission with the DN based on the IP address.

As shown in FIG. 1, the terminal device, the E-UTRAN, and the network elements in the EPC in the mobile communications network architecture communicate and interact with the DN by using corresponding interfaces.

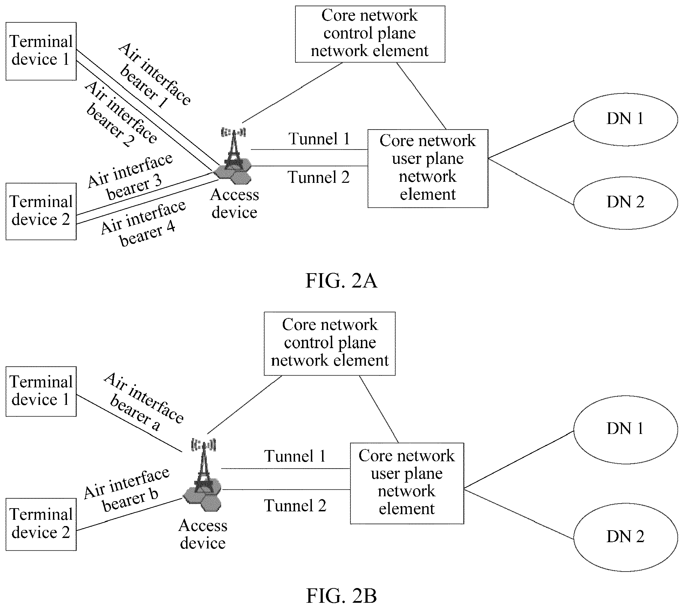

Based on the EPS architecture shown in FIG. 1, to reduce design costs of a hardware platform and facilitate generalization and deployment of a mobile packet network, an SDN idea may be introduced into the mobile communications network, to separate a control plane interface signaling processing function and a user plane data forwarding function of a gateway device in the core network. FIG. 2 shows another possible mobile communications network architecture. As shown in FIG. 2, the mobile communications network architecture includes an access device, a core network control plane network element, and a core network user plane network element.

The core network control plane network element is a network element responsible for mobility management, forwarding path management, and IP address assignment in the mobile communications network. The core network user plane network element is a network element responsible for providing a service packet forwarding function for a user. Specific functions are not described herein again.

Optionally, in the embodiments of the present invention, in the mobile communications network architectures shown in FIG. 1 and FIG. 2, a granularity of an air interface bearer between the terminal device and the access device may be: Each terminal device and each session correspond to one air interface bearer (per UE per session) or each terminal device corresponds to one air interface bearer (per UE).

Only the mobile communications network architecture shown in FIG. 2 is used as an example. In a schematic network connection diagram of a mobile communications network shown in FIG. 2A, a granularity of an air interface bearer between each terminal device and an access device is per UE per session. As shown in FIG. 2A, when a terminal device 1 accesses both a DN 1 and a DN 2, there are two different air interface bearers (an air interface bearer 1 and an air interface bearer 2) between the terminal device and the access device. Different air interface bearers are used by the terminal device 1 to access different DNs.

Still using the mobile communications network architecture shown in FIG. 2 as an example, in a schematic network connection diagram of a mobile communications network shown in FIG. 2B, a granularity of an air interface bearer between each terminal device and an access device is per UE. That is, regardless of a quantity of DNs that a terminal device simultaneously accesses, the terminal device accesses the DNs by using a same air interface bearer. As shown in FIG. 2B, when a terminal device 1 accesses both a DN 1 and a DN 2, there is one air interface bearer, that is, an air interface bearer a, between the terminal device 1 and the access device. The air interface bearer a is used by the terminal device 1 to access the DN 1 and the DN 2.

Optionally, in the embodiments of the present invention, in the mobile communications network architectures shown in FIG. 1 and FIG. 2, the access device and the core network user plane network element are connected by using a user plane tunnel. A granularity of the tunnel between the access device and the core network user plane network element may be: Each node and each DN correspond to one tunnel (per node per DN), where the node includes nodes at two ends of the tunnel: the access device and the core network user plane network element. In the schematic network connection diagrams of the mobile communications networks shown in FIG. 2A and FIG. 2B provided in the embodiments of the present invention, a granularity of a tunnel between an access device and a core network user plane network element is per node per DN. As shown in FIG. 2A or FIG. 2B, when both the terminal device 1 and a terminal device 2 access the DN 1, the terminal device 1 and the terminal device 2 use a tunnel 1 to transmit data; or when the terminal device 1 accesses the DN 1, and a terminal device 2 accesses the DN 2, the terminal device 1 uses a tunnel 1 to transmit data, and the terminal device 2 uses a tunnel 2 to transmit data.

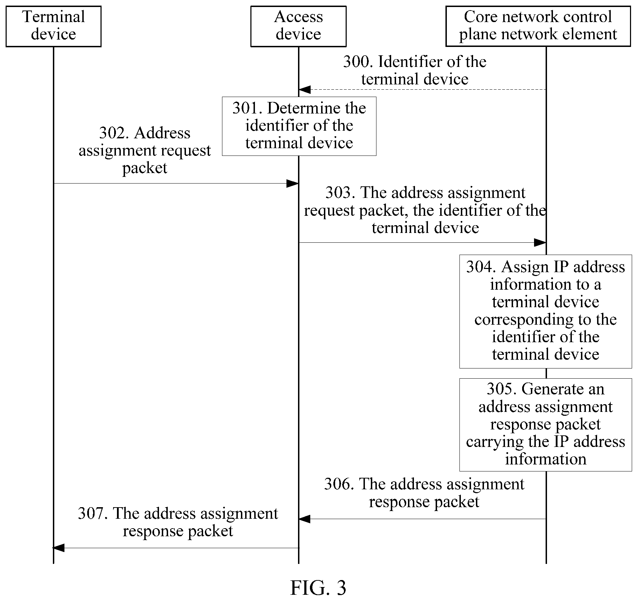

An embodiment of the present invention provides an IP address assignment method, applicable to the mobile communications network shown in FIG. 1 or FIG. 2. In the mobile communications network, a granularity of an air interface bearer between a terminal device and an access device may be per UE per session or per UE, and a granularity of a tunnel between the access device and a core network user plane network element is per node per DN. Referring to FIG. 3, a specific procedure of the method includes the following steps.

Step 301. The access device determines an identifier of a terminal device.

Optionally, the access device may determine the identifier of the terminal device through step 300 of receiving the identifier of the terminal device that is sent by a core network control plane network element.

Optionally, the core network control plane network element may assign the corresponding identifier to the terminal device in a session establishment process or an attach process of the terminal device, and send the assigned identifier of the terminal device to the access device. For example, in the session establishment process of the terminal device, the core network control plane network element adds the identifier of the terminal device to an initialization context establishment request and sends the initialization context establishment request to the access device. For another example, in the attach process of the terminal device, the core network control plane network element adds the identifier of the terminal device to a control reply message and sends the control reply message to the access device.

Optionally, the identifier of the terminal device is assigned by the core network control plane network element to the terminal device in the session establishment process or the attach process. Specifically, the identifier of the terminal device may be a temporary identifier, such as a GUTI (Globally Unique Temporary Identity, globally unique temporary identity) or a CP-UE-ID; or may be a permanent identifier, such as an IMSI (International Mobile Subscriber Identity, international mobile subscriber identity) or an IMEI (International Mobile Equipment Identity, international mobile equipment identity). The CP-UE-ID corresponds to an MME-UE-S1AP-ID in an EPC network.

Step 302. The access device receives an address assignment request packet sent by the terminal device.

Optionally, in the mobile communications network, an IP address may be assigned to an accessing terminal device by using, but not limited to, the DHCP or the NDP.

In the mobile communications network, when an IPv4 address is assigned to the terminal device by using the DHCP, the address assignment request packet may be a DHCP obtaining request packet, and the DHCP obtaining request packet may be, but not limited to, a DHCP discover (DHCP discovery) packet or a DHCP request (DHCP request) packet.

In the mobile communications network, when IPv6 address information is assigned to the terminal device by using the DHCP, the address assignment request packet may be a DHCP obtaining request packet, and the DHCP obtaining request packet may be, but not limited to, a DHCP solicit (DHCP solicit) packet or a DHCP request (DHCP request) packet.

In the mobile communications network, when IPv6 address information is assigned to the terminal device by using the NDP, the address assignment request packet may be a router solicitation (Router Solicitation, RS) packet.

Step 303. The access device sends the address assignment request packet and the identifier of the terminal device to a core network control plane network element.

Optionally, the access device may perform step 303 in, but not limited to, the following two manners:
Manner 1: The access device adds the identifier of the terminal device to the address assignment request packet, and forwards, to the core network control plane network element by using a core network user plane network element, the address assignment request packet to which information has been added.
Manner 2: The access device encapsulates the address assignment request packet and the identifier of the terminal device into core network uplink control signaling, and sends the core network uplink control signaling to the core network control plane network element.

In the mobile communications network, the access device and the core network control plane network element are connected by using a control plane tunnel. That is, the access device and the core network control plane network element can transmit only core network uplink/downlink control signaling. In this embodiment of the present invention, the address assignment request packet belongs to a user plane data packet. Therefore, it can be learned based on the foregoing descriptions that, the access device cannot directly forward the address assignment request packet to the core network control plane network element.

Therefore, the access device may transmit, in Manner 1 by using the user plane tunnel between the access device and the core network user plane network element, the address assignment request packet to which the information has been added, and the core network user plane network element forwards the address assignment request packet to the core network control plane network element. Alternatively, the access device encapsulates the address assignment request packet and the identifier of the terminal device into the core network uplink control signaling, and directly sends the core network uplink control signaling to the core network control plane network element by using the control plane tunnel.

Optionally, in Manner 1, the adding, by the access device, the identifier of the terminal device to the address assignment request packet includes:
adding, by the access device, the identifier of the terminal device to an extension field in the address assignment request packet.

Optionally, in step 303, the access device further sends tunnel information and/or a network identifier to the core network control plane network element.

The tunnel information is information about a tunnel that is between the access device and a core network user plane network element and that serves the terminal device.

The network identifier is an identifier of a network that the terminal device requests to access (for example, a DN 1 or a DN 2). The network identifier is determined by the terminal device. Optionally, when sending the address assignment request packet to the access device in step 302, the terminal device adds the network identifier to the address assignment request packet and sends the address assignment request packet to the access device, or notifies the access device of the network identifier in another manner. This is not limited in this embodiment of this application.

Optionally, similar to the manner in which the access device sends the identifier of the terminal device, the access device may add the tunnel information and/or the network identifier to the address assignment request packet, or encapsulate the tunnel information and/or the network identifier into the core network uplink control signaling, to send the tunnel information and/or the network identifier to the core network control plane network element.

In this way, the access device can successfully send the tunnel information and/or the network identifier to the core network control plane network element.

Optionally, when a granularity of an air interface bearer between the terminal device and the access device in the mobile communications network is per UE per session, the access device may not need to send the network identifier to the core network control plane network element, and the core network control plane network element may determine, by using an air interface bearer for sending the address assignment request packet, the network that the terminal device requests to access. Therefore, whether the address assignment request packet includes the network identifier is not limited.

However, when the granularity of the air interface bearer between the terminal device and the access device in the mobile communications network is per UE, the core network control plane network element cannot determine the network that the terminal device requests to access. Therefore, the terminal device needs to notify, by using the access device, the core network control plane network element of a network identifier of the network that the terminal device requests to access.

Step 304. After receiving the address assignment request packet and the identifier of the terminal device that are sent by the access device, the core network control plane network element assigns IP address information to the terminal device corresponding to the identifier of the terminal device.

This step is the same as a conventional IP address information assignment method. After receiving the address assignment request packet, the core network control plane network element assigns the IP address information to the terminal device based on an indication in the address assignment request packet.

In step 302, the address assignment request packet may be a DHCP discovery packet, a DHCP solicit packet, a DHCP request packet, or an RS packet.

When the address assignment request packet is a DHCP discovery packet, the IP address information assigned by the core network control plane network element to the terminal device is an unassigned IPv4 address.

When the address assignment request packet is a DHCP solicit packet, the IP address information assigned by the core network control plane network element to the terminal device is an unassigned subnet prefix.

When the address assignment request packet is a DHCP request packet, the IP address information assigned by the core network control plane network element to the terminal device is a determined IPv4 address or subnet prefix. Optionally, the IP address information further includes lease period information of the IP address information and the like.

When the address assignment request packet is an RS packet, the IP address information assigned by the core network control plane network element to the terminal device is an unassigned subnet prefix used to generate an IPv6 address.

In the conventional IP address assignment method, when assigning IP address information, a core network control plane network element cannot determine a terminal device to which the IP address information is to be assigned. Consequently, the core network control plane network element cannot correctly assign an IP address to the terminal device. Further, the core network control plane network element cannot correctly perform policy control based on the IP address of the terminal device, such as packet forwarding policy control or QoS control. More importantly, without the IP address, the terminal device cannot access an external data network.

Compared with the conventional IP address assignment method, in this embodiment of the present invention, according to the foregoing step, the core network control plane network element assigns the IP address information to the terminal device corresponding to the identifier of the terminal device. In this way, after assigning the IP address information, the core network control plane network element can determine a correspondence between the IP address information and the identifier of the terminal device. Therefore, the core network can accurately assign an IP address to the terminal device, and can further perform policy control based on the IP address of the terminal device, so that the terminal device can access an external data network.

Step 305. The core network control plane network element generates an address assignment response packet carrying the IP address information.

The address assignment response packet may be, but not limited to, a DHCP obtaining response packet or a router advertisement (Router Advertisement, RA) packet. The DHCP obtaining response packet may be a DHCP offer (DHCP offer) packet, a DHCP acknowledgement (DHCP ACK) packet, a DHCP advertise (DHCP advertise) packet, or a DHCP reply (DHCP reply) packet.

In the mobile communications network, if an IPv4 address is assigned to the terminal device by using the DHCP, when the address assignment request packet is a DHCP discovery packet, the address assignment response packet is a DHCP offer packet; or when the address assignment request packet is a DHCP request packet, the address assignment response packet is a DHCP ACK packet.

In the mobile communications network, if IPv6 address information is assigned to the terminal device by using the DHCP, when the address assignment request packet is a DHCP solicit packet, the address assignment response packet is a DHCP advertise packet; or when the address assignment request packet is a DHCP request packet, the address assignment response packet is a DHCP reply packet.

In the mobile communications network, if IPv6 address information is assigned to the terminal device by using the DHCP,

In the mobile communications network, if IPv6 address information is assigned to the terminal device by using the NDP, when the address assignment request packet is an RS packet, the address assignment response packet is an RA packet.

Step 306. The core network control plane network element sends the address assignment response packet to the access device.

Optionally, corresponding to the manner of sending the address assignment request packet and the identifier of the terminal device by the access device in step 303, the core network control plane network element may perform step 306 in, but not limited to, the following two manners:
Manner 1: The core network control plane network element forwards the address assignment response packet to the access device by using a core network user plane network element.
Manner 2: The core network control plane network element encapsulates the address assignment response packet into core network downlink control signaling, and sends the core network downlink control signaling to the access device.

It can be learned based on the descriptions in step 303 that, because the access device and the core network control plane network element are connected by using the control plane tunnel, and the address assignment response packet also belongs to the user plane data packet, the core network control plane network element cannot directly forward the address assignment response packet to the access device. Therefore, the core network control plane network element can successfully send the address assignment response packet to the access device in the foregoing two manners.

Optionally, the core network control plane network element adds the identifier of the terminal device to the address assignment response packet, so that after receiving the address assignment response packet, the access device directly sends the address assignment response packet to the terminal device based on the identifier of the terminal device.

Optionally, if the access device performs step 303, and the access device further sends the tunnel information and/or the network identifier, the core network control plane network element receives the tunnel information and/or the network identifier sent by the access device, and assigns the IP address information to the terminal device based on the identifier of the terminal device and the tunnel information and/or the network identifier. The core network control plane network element may alternatively add the received tunnel information and/or network identifier to the address assignment response packet, so that after receiving the address assignment response packet, the access device sends the address assignment response packet to the terminal device based on the tunnel information and/or the network identifier.

Optionally, in Manner 1, when the core network control plane network element forwards the address assignment response packet to the access device by using the core network user plane network element, the address assignment response packet further needs to include tunnel information, so that when forwarding the address assignment response packet, the core network user plane network element may determine a target tunnel in a plurality of tunnels between the core network user plane network element and the access device based on the tunnel information included in the address assignment response packet. In this way, the core network user plane network element can successfully send the address assignment response packet to the access device by using the target tunnel.

Optionally, when the core network control plane network element encapsulates the address assignment response packet into the core network downlink control signaling and sends the core network downlink control signaling to the access device in Manner 2, the address assignment response packet further needs to include the identifier of the terminal device, so that after receiving the core network downlink control signaling, the access device may decapsulate the core network downlink control signaling to obtain the address assignment response, and send the address assignment response packet to the terminal device based on the identifier of the terminal device included in the address assignment response.

Step 307. The access device receives the address assignment response packet sent by the core network control plane network element, and sends the address assignment response packet to the terminal device.

It can be learned based on the descriptions in step 306 that, the address assignment response packet includes at least one or a combination of the following: the identifier of the terminal device, the tunnel information, and the network identifier. Therefore, after receiving the address assignment response packet, the access device may send the address assignment response packet to the terminal device based on the information included in the address assignment response packet.

After receiving the address assignment response packet, the terminal device may determine the IP address information assigned by the core network control plane network element to the terminal device, for example, an IPv4 address or a subnet prefix assigned to the terminal device, or lease period information of the IP address information.

If the IP address information includes the subnet prefix, the terminal device may generate a globally unique unicast address (that is, an IPv6 address) based on the subnet prefix and an interface identifier of the terminal device in a conventional IPv6 address generation manner.

Optionally, in this embodiment of the present invention, the core network control plane network element in the mobile communications network includes two network elements: a session management (Session Management, SM) function module and a mobility management (Mobility Management) function module. The mobility management function module is responsible for attaching a terminal device to a network, updating a location of a terminal device, and so on. The session management function module is responsible for establishing and updating a session connection of a terminal device, assigning IP address information to a terminal device, and so on. In this case, the core network control plane network element used in this embodiment of the present invention includes a session management function module. When the access device performs step 303, the method further includes: sending, by the access device, an identifier of the session management function module to the core network control plane network element, to successfully send the address assignment request packet and the identifier of the terminal device to the session management function module.

Optionally, in the session establishment process or the attach process, the core network control plane network element sends, to the access device, context information of the terminal device that carries the identifier of the terminal device.

Optionally, the context information of the terminal device includes at least one of the following information: tunnel information, a network identifier, and IP address information that is pre-assigned by the core network control plane network element to the terminal device. The tunnel information may be a tunnel identifier, an IP address of a user plane network element serving the terminal device, or the like.

Optionally, the context information of the terminal device further includes a first indication message. The first indication message is used to instruct the access device to send the subsequently received address assignment request packet to the core network control plane network element. After receiving the first indication message, the access device sends a subsequently received packet to the core network control plane network element; or detects a subsequently received packet, and when determining that the received packet is an address assignment request packet, sends the packet to the core network control plane network element.

Correspondingly, the core network control plane network element sends a second indication message to the access device, to instruct the access device to stop sending a received packet to the core network control plane network element or stop detecting a received packet. The second indication message may be included in the address assignment response packet, which is specifically a DHCP ACK packet, a DHCP reply packet, or an RA packet. Alternatively, after sending the address assignment response packet, the core network control plane network element further sends a second indication message to the access device by using a control interface between the core network control plane network element and the access device.

According to the IP address assignment method provided in this embodiment of the present invention, the access device in the mobile communications network may determine the identifier of the terminal device, and after obtaining the address assignment request packet sent by the terminal device, send both the address assignment request packet and the identifier of the terminal device to the core network control plane network element, so that the core network control plane network element assigns the IP address information to the terminal device corresponding to the identifier of the terminal device. In this way, after assigning the IP address information, the core network control plane network element can determine a correspondence between the IP address information and the identifier of the terminal device. Therefore, the core network control plane network element can accurately assign an IP address to the terminal device, and can further perform policy control based on the IP address of the terminal device, so that the terminal device can access an external data network.

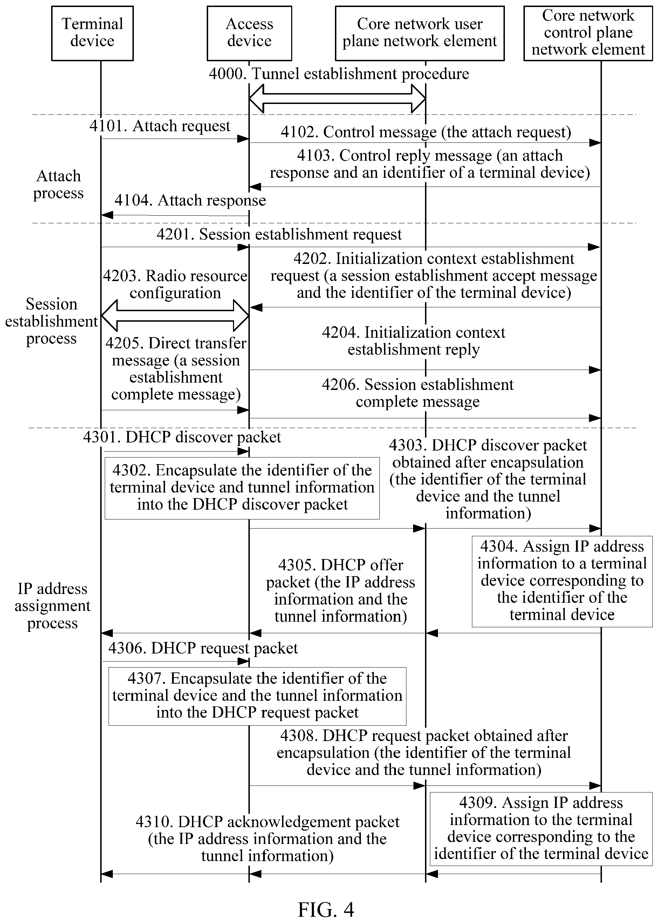

Based on the foregoing embodiment, an embodiment of the present invention further provides an IP address assignment example. Referring to FIG. 4, in this example, in a mobile communications network, an IP address is assigned to a terminal device by using the DHCP. In addition, in the mobile communications network, an access device and a core network control plane network element transmit a DHCP obtaining request packet (that is, a DHCP discover packet or a DHCP request packet) and a DHCP obtaining response packet (a DHCP offer packet or a DHCP acknowledgement packet) through forwarding by using a core network user plane network element. Referring to FIG. 4, this example specifically includes an attach process, a session establishment process, and an IP address information assignment process. Before the terminal device performs the attach process, the access device and the core network user plane network element that serve the terminal device establish a user plane tunnel through step 4000.

The attach process of the terminal device includes the following steps.

Step 4101. The terminal device sends an attach request to the access device.

Step 4102. The access device adds the attach request to a control message, and sends the control message to the core network control plane network element.

Step 4103. The core network control plane network element generates an attach response after determining a successful attachment, and sends, to the access device, a control reply message carrying the attach response.

Step 4104. The access device obtains the attach response included in the control reply message after receiving the control reply message, and forwards the attach response to the terminal device, to notify the terminal device of the successful attachment.

The session establishment process of the terminal device includes the following steps.

Step 4201. The terminal device forwards a session establishment request to the core network control plane network element by using the access device.

Step 4202. After confirming that the terminal device can establish a session, the core network control plane network element generates a session establishment accept message, determines the core network user plane network element serving the terminal device, and sends, to the access device, an initialization context establishment request carrying the session establishment accept message.

Step 4203. After receiving the initialization context establishment request, the access device initiates a radio resource re-configuration process to the terminal device, to implement radio resource configuration.

Step 4204. After the radio resource configuration succeeds, the access device saves context information that is in the initialization context establishment request, and sends an initialization context establishment reply to the core network control plane network element.

Step 4205. The terminal device sends, to the access device, a direct transfer message carrying a session establishment complete message.

Step 4206. After receiving the direct transfer message, the access device obtains the session establishment complete message in the direct transfer message, and sends the session establishment complete message to the core network control plane network element.

In this embodiment of the present invention, in the attach process or the session establishment process, the core network control plane network element assigns an identifier of the terminal device (CP-UE ID) to the terminal device, and sends the determined identifier of the terminal device to the access device. For example, in step 4103, the core network control plane network element adds the identifier of the terminal device to the control reply message and sends the control reply message to the access device. For another example, in step 4202, the core network control plane network element adds the identifier of the terminal device to the initialization context establishment request and sends the initialization context establishment request to the access device.

The IP address assignment process of the terminal device includes the following steps.

Step 4301. The terminal device sends a DHCP discover packet to the access device.

When a granularity of an air interface bearer between the terminal device and the access device is per UE, the terminal device further needs to add a network identifier to the DHCP discover packet, and sends, to the access device, the DHCP discover packet to which the network identifier has been added.

Step 4302. The access device encapsulates the identifier of the terminal device and tunnel information into the DHCP discover packet.

Specifically, the access device adds the identifier of the terminal device to the DHCP discover packet, and encapsulates the tunnel information into the DHCP discover packet.

The tunnel information is information about a tunnel that is between the terminal device and the user plane network element and that serves the terminal device in step 4000, for example, information such as a tunnel identifier or an IP address of the core network user plane network element.

After receiving the DHCP discover packet, the core network user plane network element forwards the DHCP discover packet to the core network control plane network element by using a control interface between the core network user plane network element and the core network control plane network element.

Step 4303. The access device forwards, to the core network control plane network element by using the core network user plane network element, a DHCP discover packet that is obtained after encapsulation and that carries the identifier of the terminal device and the tunnel information.

Step 4304. After receiving the DHCP discover packet obtained after encapsulation, the core network control plane network element assigns IP address information to the terminal device corresponding to the identifier of the terminal device, where the IP address information may be an unassigned IPv4 address or subnet prefix.

Step 4305. The core network control plane network element adds the IP address information and the tunnel information to a DHCP offer packet, and forwards the DHCP offer packet to the access device by using the core network user plane network element, so that after receiving the DHCP offer packet, the access device sends the DHCP offer packet to the terminal device.

Specifically, the tunnel information in step 4305 and the tunnel information in step 4302 may be different or the same. This is not limited in the present invention. When the tunnel information in step 4305 and the tunnel information in step 4302 are different, the tunnel information in step 4305 is control plane tunnel information, and the tunnel information in step 4302 is user plane tunnel information. When the tunnel information in step 4305 and the tunnel information in step 4302 are the same, the tunnel information is, for example, a tunnel identifier.

Step 4306. The terminal device sends a DHCP request packet to the access device.

When the granularity of the air interface bearer between the terminal device and the access device is per UE, the terminal device first adds the network identifier to the DHCP request packet, and then sends, to the access device, the DHCP request packet to which the network identifier has been added.

Step 4307. The access device encapsulates the identifier of the terminal device and the tunnel information into the DHCP request packet.

Step 4308. The access device forwards, to the core network control plane network element by using the core network user plane network element, the DHCP request packet carrying the identifier of the terminal device and the tunnel information.

Step 4309. After receiving the DHCP request packet obtained after encapsulation, the core network control plane network element assigns IP address information to the terminal device corresponding to the identifier of the terminal device, where the IP address information may be lease period information of the IP address information, or the like.

Step 4310. The core network control plane network element adds the IP address information and the tunnel information to a DHCP acknowledgement packet, and forwards the DHCP acknowledgement packet to the access device by using the core network user plane network element, so that after receiving the DHCP acknowledgement packet, the access device sends the DHCP acknowledgement packet to the terminal device.

Similarly, the tunnel information in step 4310 and the tunnel information in step 4308 may be the same or different.

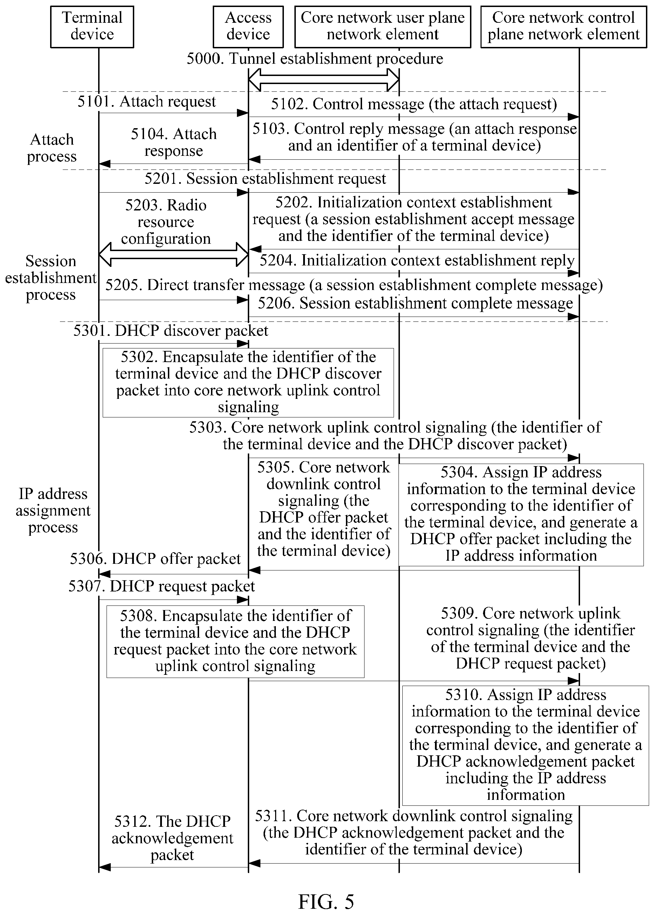

Based on the foregoing embodiment, an embodiment of the present invention further provides an IP address assignment example. Referring to FIG. 5, in this example, in a mobile communications network, an IP address is assigned to a terminal device by using the DHCP. In addition, in the mobile communications network, an access device and a core network control plane network element transmit a DHCP obtaining request packet (that is, a DHCP discover packet or a DHCP request packet) and a DHCP obtaining response packet (a DHCP offer packet or a DHCP acknowledgement packet) by adding the packets to core network control signaling. Referring to FIG. 5, this example also includes an attach process, a session establishment process, and an IP address information assignment process. The attach process and the session establishment process are the same as those in the example shown in FIG. 4, and details are not described herein again. In addition, a manner in which the access device determines an identifier of the terminal device is also the same as that in the foregoing embodiment, and details are not described herein again.

The IP address assignment process of the terminal device includes the following steps.

Step 5301. The terminal device sends a DHCP discover packet to the access device.

Step 5302. The access device adds the identifier of the terminal device and the DHCP discover packet to core network uplink control signaling.

Step 5303. The access device directly sends, to the core network control plane network element, the core network uplink control signaling carrying the identifier of the terminal device and the DHCP discover packet.

Step 5304. After receiving the core network uplink control signaling, the core network control plane network element assigns IP address information to the terminal device corresponding to the identifier of the terminal device, and generates a DHCP offer packet including the IP address information, where the IP address information may be an unassigned IPv4 address or subnet prefix.

Step 5305. The core network control plane network element adds the DHCP offer packet and the identifier of the terminal device to core network downlink control signaling and directly sends the core network downlink control signaling to the access device.

Step 5306. After receiving the core network downlink control signaling, the access device sends the DHCP offer packet to the terminal device based on the identifier of the terminal device in the core network downlink control signaling.

Step 5307. After selecting the IP address information in the DHCP offer packet, the terminal device sends a DHCP request packet to the access device.

Step 5308. The access device encapsulates the identifier of the terminal device and the DHCP request packet into core network uplink control signaling.

Step 5309. The access device directly sends, to the core network control plane network element, the core network uplink control signaling carrying the identifier of the terminal device and the DHCP request packet.

Step 5310. After receiving the core network uplink control signaling, the core network control plane network element assigns IP address information to the terminal device corresponding to the identifier of the terminal device, and generates a DHCP acknowledgement packet including the IP address information, where the IP address information may be lease period information of the IP address information, or the like.

Step 5311. The core network control plane network element adds the DHCP acknowledgement packet and the identifier of the terminal device to core network downlink control signaling, and directly sends the core network downlink control signaling to the access device.

Step 5312. After receiving the core network downlink control signaling, the access device sends the DHCP acknowledgement packet to the terminal device based on the identifier of the terminal device in the core network downlink control signaling.

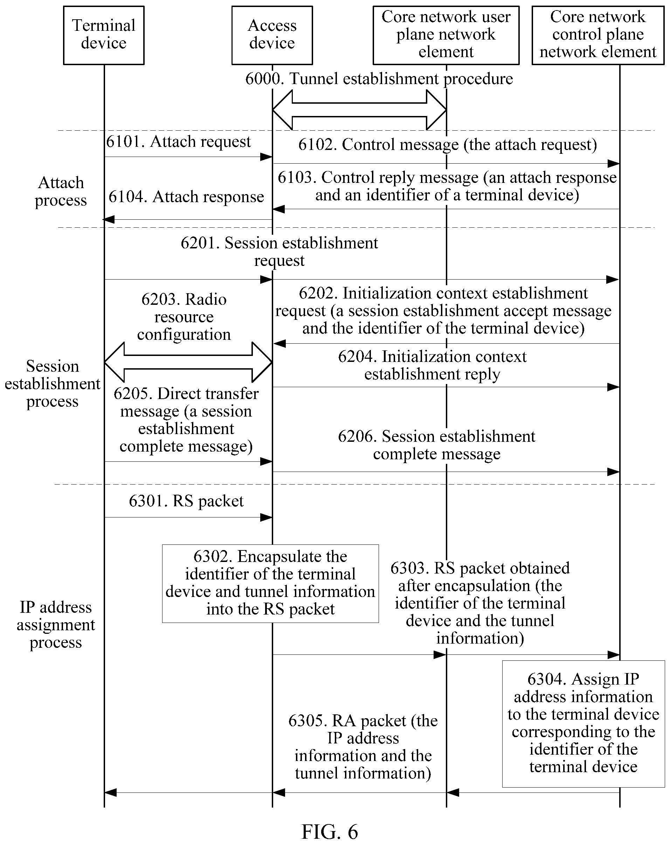

Based on the foregoing embodiment, an embodiment of the present invention further provides an IP address assignment example. Referring to FIG. 6, in this example, in a mobile communications network, an IP address is assigned to a terminal device by using the NDP. In addition, in the mobile communications network, the access device and a core network control plane network element transmit an RS packet and an RA packet through forwarding by using a core network user plane network element. Referring to FIG. 6, this example also includes an attach process, a session establishment process, and an IP address information assignment process. The attach process and the session establishment process are the same as those in the example shown in FIG. 4, and details are not described herein again. In addition, a manner in which the access device determines an identifier of the terminal device is also the same as that in the foregoing embodiment, and details are not described herein again.

The IP address assignment process of the terminal device includes the following steps.

Step 6301. The terminal device sends an RS packet to the access device.

Step 6302. The access device encapsulates the identifier of the terminal device and tunnel information into the RS packet.

Specifically, the access device adds the identifier of the terminal device to the RS packet, and encapsulates the tunnel information into the RS packet.

The tunnel information is information about a tunnel that is between the terminal device and the user plane network element and that serves the terminal device in step 6000, for example, information such as a tunnel identifier or an IP address of the core network user plane network element.

Step 6303. The access device forwards, to the core network control plane network element by using the core network user plane network element, an RS packet that is obtained after encapsulation and that carries the identifier of the terminal device and the tunnel information.

Step 6304. After receiving the RS packet obtained after encapsulation, the core network control plane network element assigns IP address information to the terminal device corresponding to the identifier of the terminal device, where the IP address information is an unassigned subnet prefix.

Step 6305. The core network control plane network element encapsulates the IP address information and the tunnel information into an RA packet, and forwards the RA packet to the access device by using the core network user plane network element, so that after receiving the RA packet, the access device sends the RA packet to the terminal device based on the IP address information and the tunnel information.

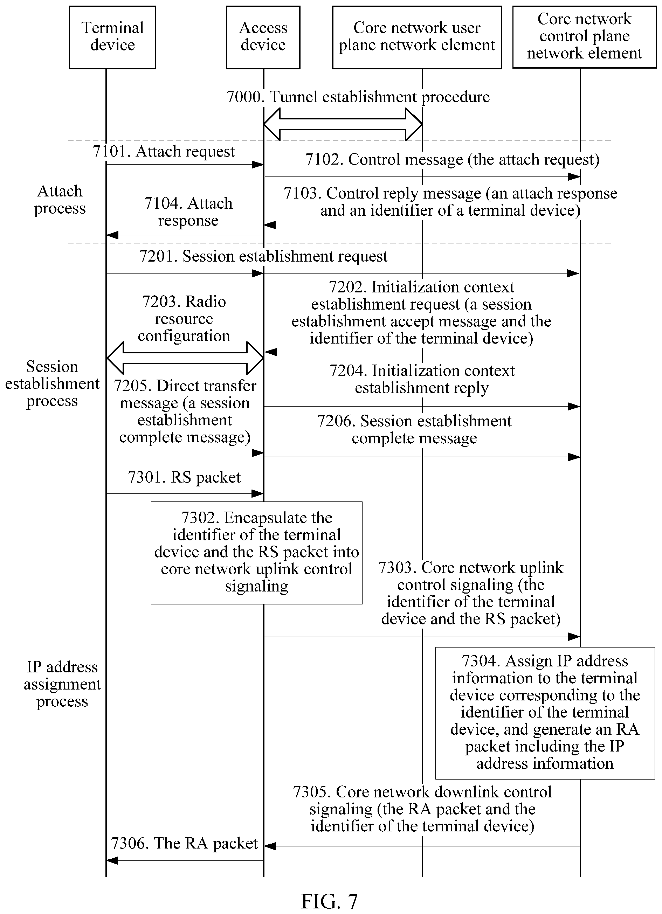

Based on the foregoing embodiment, an embodiment of the present invention further provides an IP address assignment example. Referring to FIG. 7, in this example, in a mobile communications network, an IP address is assigned to a terminal device by using the NDP. In addition, in the mobile communications network, an access device and a core network control plane network element transmit an RS packet and an RA packet by encapsulating the packets into core network control signaling. Referring to FIG. 7, this example also includes an attach process, a session establishment process, and an IP address information assignment process. The attach process and the session establishment process are the same as those in the example shown in FIG. 4, and details are not described herein again. In addition, a manner in which the access device determines an identifier of the terminal device is also the same as that in the foregoing embodiment, and details are not described herein again.

The IP address assignment process of the terminal device includes the following steps.

Step 7301. The terminal device sends an RS packet to the access device.

Step 7302. The access device adds an identifier of the terminal device and the RS packet to core network uplink control signaling.

Step 7303. The access device directly sends, to the core network control plane network element, the core network uplink control signaling carrying the identifier of the terminal device and the RS packet.

Step 7304. After receiving the core network uplink control signaling, the core network control plane network element assigns IP address information to the terminal device corresponding to the identifier of the terminal device, and generates an RA packet including the IP address information, where the IP address information may be an unassigned subnet prefix.

Step 7305. The core network control plane network element adds the RA packet and the identifier of the terminal device to core network downlink control signaling and directly sends the core network downlink control signaling to the access device.

Step 7306. After receiving the core network downlink control signaling, the access device sends the RA packet to the terminal device based on the identifier of the terminal device.

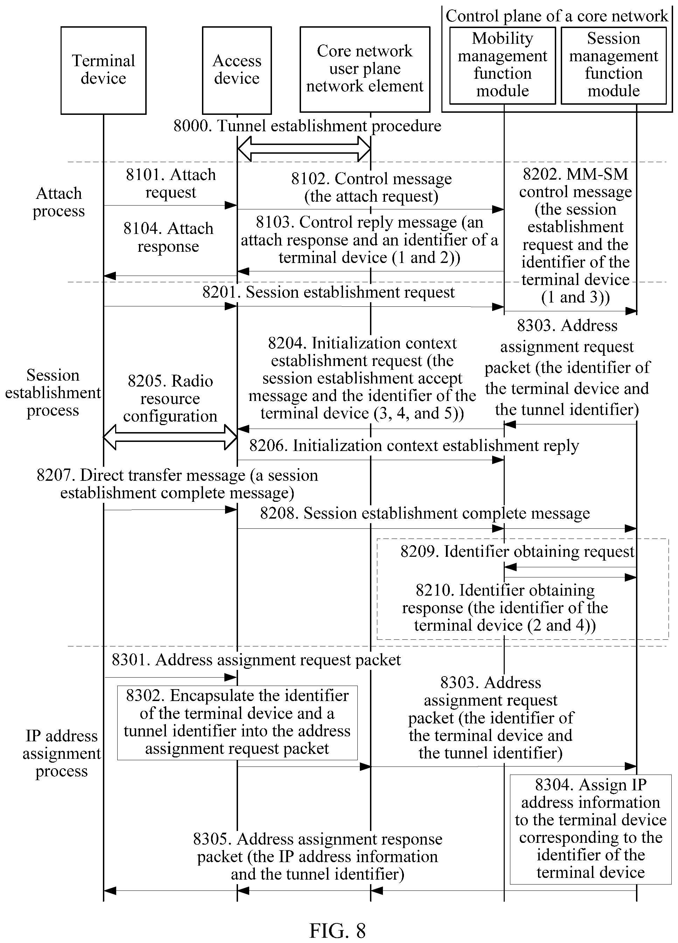

Based on the foregoing embodiment, an embodiment of the present invention further provides an IP address assignment example. Referring to FIG. 8, in this example, in a mobile communications network, an IP address is assigned to a terminal device by using the DHCP or the NDP. In addition, in the mobile communications network, an access device and a core network control plane network element transmit an address assignment request packet (that is, a DHCP discover packet, a DHCP request packet, an RS packet, or the like) and an address assignment response packet (a DHCP offer packet, a DHCP acknowledgement packet, an RA packet, or the like) through forwarding by using a core network user plane network element. As shown in FIG. 8, the core network control plane network element includes a mobility management function module and a session management function module.

Referring to FIG. 8, this example specifically includes an attach process, a session establishment process, and an IP address information assignment process. Before the terminal device performs the attach process, the access device and the core network user plane network element that serve the terminal device establish a user plane tunnel through step 8000.

The attach process of the terminal device includes the following steps.

Step 8101. The terminal device sends an attach request to the access device.

Step 8102. The access device adds the attach request to a control message, and sends the control message to the mobility management module of the core network control plane network element.

Step 8103. The mobility management module generates an attach response after determining a successful attachment, and sends, to the access device, a control reply message carrying the attach response.

Step 8104. The access device obtains the attach response included in the control reply message after receiving the control reply message, and forwards the attach response to the terminal device, to notify the terminal device of the successful attachment.

The session establishment process of the terminal device includes the following steps.

Step 8201. The terminal device forwards a session establishment request to the mobility management function module by using the access device.

Step 8202. The mobility management function module sends an MM-SM control message to the session management function module in the core network control plane network element, where the MM-SM control message carries the session establishment request.

Step 8203. After confirming that the terminal device can establish a session, the session management function module generates a session establishment accept message, and sends, to the mobility management function module, an MM-SM control message carrying the session establishment accept message.

Step 8204. After receiving the MM-SM control message, the mobility management function module adds the session establishment accept message in the MM-SM control message to an initialization context establishment request, and sends the initialization context establishment request to the access device.

Step 8205. After receiving the initialization context establishment request, the access device initiates a radio resource re-configuration process to the terminal device, to implement radio resource configuration.

Step 8206. After the radio resource configuration succeeds, the access device saves context information that is in the initialization context establishment request, and sends an initialization context establishment reply to the mobility management function module.

Step 8207. The terminal device sends, to the access device, a direct transfer message carrying a session establishment complete message.

Step 8208. After receiving the direct transfer message, the access device obtains the session establishment complete message in the direct transfer message, and sends the session establishment complete message to the mobility management function module.

Step 8209 and step 8210 are optional steps, and are not essential steps in the session establishment process. The two steps are for the purpose of sending an identifier of the terminal device to the session management function module when the mobility management function module determines the identifier of the terminal device.

Optionally, in step 8209, the session management function module sends an identifier obtaining request to the mobility management function module.

Optionally, in step 8210, after receiving the identifier obtaining request, the mobility management function module sends the determined identifier of the terminal device to the session management function module.

In this example, the mobility management function module may assign the identifier of the terminal device to the terminal device in the attach (mobility management) process or the session establishment process. Alternatively, the session management function module may assign the identifier of the terminal device to the terminal device in the session establishment process. Therefore, in the attach process and the session establishment process, there are a plurality of manners of obtaining the identifier of the terminal device by the session management function module and the access device, and the present invention may include, but not limited to, several manners shown in FIG. 8. As shown in FIG. 8, one digit in parentheses and after the identifier of the terminal device in each message may represent one manner.
Manner 1: In the attach process, after determining the identifier of the terminal device, the mobility management function module adds the identifier of the terminal device to the control reply message and sends the control reply message to the access device through step 8103; and adds the identifier of the terminal device to the MM-SM control message and sends the MM-SM control message to the session management function module through step 8202.
Manner 2: In the attach process, after determining the identifier of the terminal device, the mobility management function module adds the identifier of the terminal device to the control reply message and sends the control reply message to the access device through step 8103; and adds the identifier of the terminal device to an identifier obtaining response and sends the identifier obtaining response to the session management function module through step 8210.
Manner 3: In a session management process, after determining the identifier of the terminal device, the mobility management function module adds the identifier of the terminal device to the MM-SM control message and sends the MM-SM control message to the session management function module through step 8202; and adds the identifier of the terminal device to the initialization context establishment request and sends the initialization context establishment request to the access device through step 8204.
Manner 4: In a session management process, after determining the identifier of the terminal device, the mobility management function module adds the identifier of the terminal device to the initialization context establishment request and sends the initialization context establishment request to the access device through step 8204; and adds the identifier of the terminal device to an identifier obtaining response and sends the identifier obtaining response to the session management function module through step 8210.
Manner 5: In the session establishment process, after determining the identifier of the terminal device, first, the session management function module sends the identifier of the terminal device to the mobility management function module through step 8203. Then, the mobility management function module adds the identifier of the terminal device to the initialization context establishment request and forwards the initialization context establishment request to the access device through step 8204.

The IP address assignment process of the terminal device is similar to the IP address assignment processes in the examples shown in FIG. 4 and FIG. 6. Therefore, in this example, only an address assignment request packet and an address assignment response packet are used as examples for description. The IP address assignment process of the terminal device includes the following steps.

Step 8301. The terminal device sends an address assignment request packet to the access device.

Step 8302. The access device encapsulates the identifier of the terminal device and tunnel information into the address assignment request packet.

Specifically, the access device adds the identifier of the terminal device to the address assignment request packet, and encapsulates the tunnel information into the address assignment request packet.

The tunnel information is information about a tunnel that is between the terminal device and the user plane network element and that serves the terminal device in step 8000, for example, information such as a tunnel identifier or an IP address of the core network user plane network element.

Step 8303. The access device forwards, to the session management function module by using the core network user plane network element, an address assignment request packet that is obtained after encapsulation and that carries the identifier of the terminal device and the tunnel information.

Step 8304. After receiving the address assignment request packet obtained after encapsulation, the session management function module assigns IP address information to the terminal device corresponding to the identifier of the terminal device, where the IP address information may be an unassigned IPv4 address or subnet prefix, or a lease period of the IP address information.

Step 8305. The session management function module adds the IP address information and the tunnel information to an address assignment response packet, and forwards the address assignment response packet to the access device by using the core network user plane network element, so that the access device sends the address assignment response packet to the terminal device after receiving the address assignment response packet.

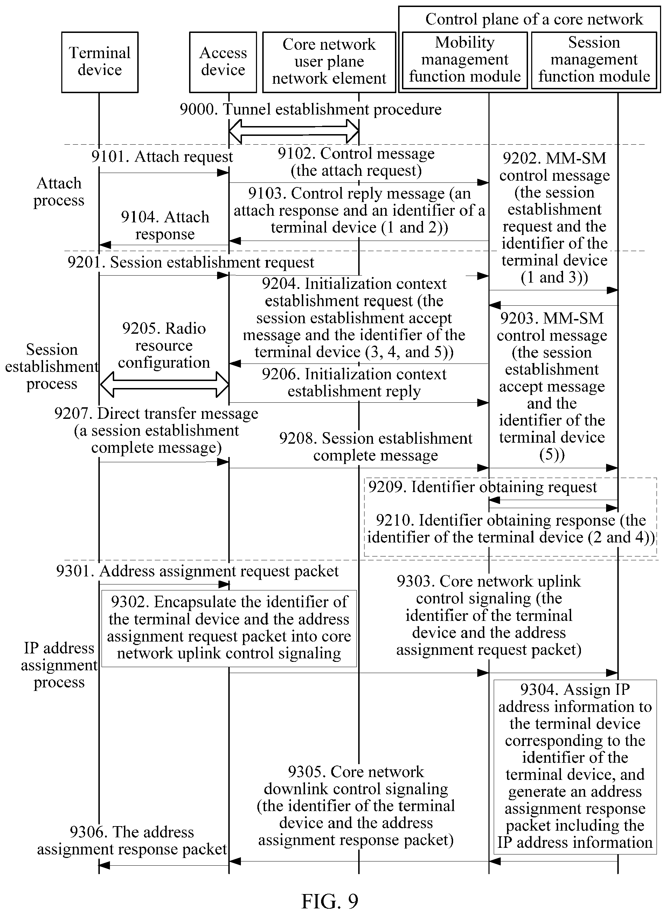

Based on the foregoing embodiment, an embodiment of the present invention further provides an IP address assignment example. Referring to FIG. 9, in this example, in a mobile communications network, an IP address is assigned to a terminal device by using the DHCP or the NDP. In addition, in the mobile communications network, an access device and a core network control plane network element encapsulate a DHCP obtaining request packet (that is, a DHCP discover packet, a DHCP request packet, or an RS packet) and a DHCP obtaining response packet (a DHCP offer packet, a DHCP acknowledgement packet, or an RA packet) into core network control signaling, to transmit the related signaling. As shown in FIG. 9, the core network control plane network element includes a mobility management function module and a session management function module.

Referring to FIG. 9, this example also includes an attach process, a session establishment process, and an IP address information assignment process. The attach process and the session establishment process are the same as those in the example shown in FIG. 8, and details are not described herein again. In addition, a manner in which the access device and the session management function module determine an identifier of the terminal device is also the same as that in the embodiment shown in FIG. 8, and details are not described herein again.

The IP address assignment process of the terminal device is similar to the IP address assignment processes in the examples shown in FIG. 5 and FIG. 7. Therefore, in this example, only an address assignment request packet and an address assignment response packet are used as examples for description. The IP address assignment process of the terminal device includes the following steps.

Step 9301. The terminal device sends an address assignment request packet to the access device.

Step 9302. The access device encapsulates the identifier of the terminal device and the address assignment request packet into core network uplink control signaling.

Step 9303. The access device directly sends, to the mobility management function module in the core network control plane network element, core network uplink control signaling that is obtained after encapsulation and that carries the identifier of the terminal device and the address assignment request packet, and the mobility management function module forwards the address assignment request packet to the session management function module.

Step 9304. After receiving the core network uplink control signaling, the session management function module assigns IP address information to the terminal device corresponding to the identifier of the terminal device, and generates an address assignment response packet including the IP address information, where the IP address information may be an unassigned IPv4 address or subnet prefix, or a lease period of the IP address information.

Step 9305. The session management function module encapsulates the address assignment response packet and the identifier of the terminal device into core network downlink control signaling, and forwards the core network downlink control signaling to the access device by using the mobility management function module.

Step 9306. After receiving the core network downlink control signaling, the access device sends the address assignment response packet to the terminal device.

Optionally, in the examples shown in FIG. 4 to FIG. 9, when a granularity of an air interface bearer between the terminal device and the access device in the mobile communications network is per UE, the core network control plane network element or the session management function module cannot determine a network that the terminal device requests to access. Therefore, the terminal device needs to notify, by using the access device, the core network control plane network element or the session management function module of a network identifier of the network that the terminal device requests to access. Optionally, the terminal device may add the network identifier to the address assignment request packet, to notify the core network control plane network element or the session management function module.

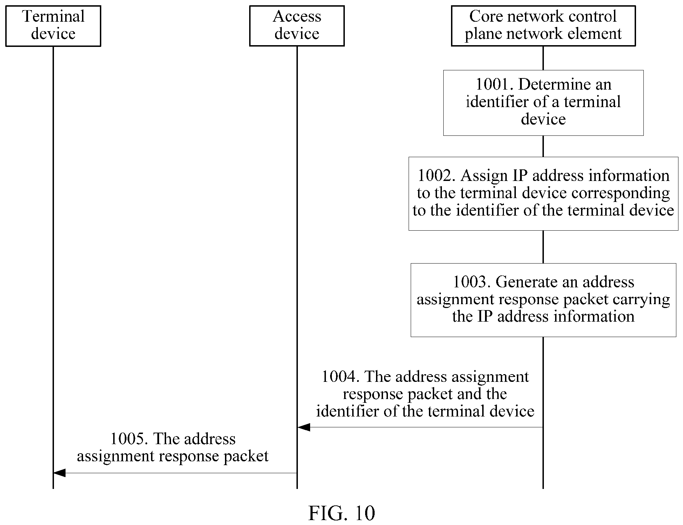

An embodiment of the present invention further provides another IP address assignment method. The method is applicable to the mobile communications network shown in FIG. 1 or FIG. 2. In the mobile communications network, a granularity of an air interface bearer between a terminal device and an access device may be per UE per session or per UE, and a granularity of a tunnel between the access device and a core network user plane network element is per node per DN. In addition, in the mobile communications network, an IP address is assigned to the terminal device by using the NDP. Referring to FIG. 10, a specific procedure of the method includes the following steps.

Step 1001. A core network control plane network element determines an identifier of a terminal device.

Optionally, in an attach process or a session establishment process of a terminal device, the core network control plane network element determines or assigns an identifier of the terminal device to the terminal device.

Specifically, the identifier of the terminal device may be a temporary identifier, such as a GUTI (Globally Unique Temporary Identity, globally unique temporary identity) or a CP-UE-ID; or may be a permanent identifier, such as an IMSI (International Mobile Subscriber Identity, international mobile subscriber identity) or an IMEI (International Mobile Equipment Identity, international mobile equipment identity). The CP-UE-ID corresponds to an MME-UE-S1AP-ID in an EPC network.

Step 1002. The core network control plane network element assigns IP address information to the terminal device corresponding to the identifier of the terminal device.

This step is the same as a conventional IP address information assignment method. After receiving an address assignment request packet, the core network control plane network element assigns the IP address information to the terminal device based on an indication in the address assignment request packet. Optionally, the IP address information assigned by the core network control plane network element to the terminal device is a subnet prefix.

In the conventional IP address assignment method, when assigning IP address information, a core network control plane network element cannot determine a terminal device to which the IP address information is to be assigned. Consequently, the core network control plane network element cannot correctly assign an IP address to the terminal device. Further, the core network control plane network element cannot correctly perform policy control based on the IP address of the terminal device, such as packet forwarding policy control or QoS control. More importantly, without the IP address, the terminal device cannot access an external data network.

Compared with the conventional IP address assignment method, in this embodiment of the present invention, according to the foregoing step, the core network control plane network element assigns the IP address information to the terminal device corresponding to the identifier of the terminal device. In this way, after assigning the IP address information, the core network control plane network element can determine a correspondence between the IP address information and the identifier of the terminal device. Therefore, the core network can accurately assign an IP address to the terminal device, and can further perform policy control based on the IP address of the terminal device, so that the terminal device can access an external data network.

Step 1003. The core network control plane network element generates an address assignment response packet carrying the IP address information.

Optionally, the address assignment response packet may be an RA packet.

Step 1004. The core network control plane network element sends the address assignment response packet and the identifier of the terminal device to the access device.

Optionally, information sent by the core network control plane network element to the access device may further include the following information: tunnel information, a network identifier, IP address information pre-assigned to the terminal device, and the like.

Optionally, the sending, by the core network control plane network element, the identifier of the terminal device includes:
in the session establishment process or the attach process, sending, by the core network control plane network element to the access device, context information of the terminal device that carries the identifier of the terminal device.

According to the foregoing method, the core network control plane network element sends the identifier of the terminal device to the access device by using the context information of the terminal device, so that after receiving the address assignment response packet, the access device successfully sends the address assignment response packet to the terminal device.

Optionally, the context information further includes any one or a combination of the following: IP address information pre-assigned by the core network control plane network element to the terminal device, tunnel information, and a network identifier. The tunnel information is information about a tunnel that is between the access device and a core network user plane network element and that serves the terminal device, and the network identifier is an identifier of a network that the terminal device requests to access. When the core network control plane network element adds the tunnel information and/or the network identifier to the context information, before sending the context information, the core network control plane network element further needs to determine the tunnel information and/or the network identifier.

Optionally, the core network control plane network element may perform step 1004 of sending the address assignment response packet to the access device in, but not limited to, the following two manners:
Manner 1: The core network control plane network element forwards the address assignment response packet to the access device by using a core network user plane network element.
Manner 2: The core network control plane network element encapsulates the address assignment response packet into core network downlink control signaling, and sends the core network downlink control signaling to the access device.

It can be learned based on the descriptions in step 1004 in the foregoing embodiment that, the core network control plane network element cannot directly forward the address assignment response packet to the access device. Therefore, the core network control plane network element can successfully send the address assignment response packet to the access device in the foregoing two manners.

Optionally, the address assignment response packet includes at least one or a combination of the following: the identifier of the terminal device, the tunnel information, and the network identifier.

Optionally, in Manner 2, the core network control plane network element encapsulates the address assignment response packet, the tunnel information, the network identifier, and the like together into the core network downlink control signaling and sends the core network downlink control signaling to the access device.

Step 1005. After receiving the address assignment response packet and the identifier of the terminal device, the access device sends the address assignment response packet to the terminal device based on the identifier of the terminal device.

According to the foregoing step, after receiving the address assignment response packet, the terminal device can determine the IP address information assigned by the core network control plane network element to the terminal device, for example, a subnet prefix used to generate an IPv6 address. Optionally, if the IP address information includes the subnet prefix of the IPv6 address, the terminal device may generate a globally unique unicast address (that is, the IPv6 address) based on the subnet prefix and an interface identifier of the terminal device in a conventional IPv6 address generation manner.

Optionally, when the core network control plane network element in the mobile communications network in this embodiment of the present invention is divided into a session management function module and a mobility management function module, the core network control plane network element used in this embodiment of the present invention includes the session management function module.

According to the IP address assignment method provided in this embodiment of the present invention, after determining the identifier of the terminal device, the core network control plane network element in the mobile communications network assigns the IP address information to the terminal device corresponding to the identifier of the terminal device. In this way, after assigning the IP address information, the core network control plane network element can determine a correspondence between the IP address information and the identifier of the terminal device. Therefore, the core network control plane network element can accurately assign an IP address to the terminal device, and can further perform policy control based on the IP address of the terminal device, so that the terminal device can access an external data network.

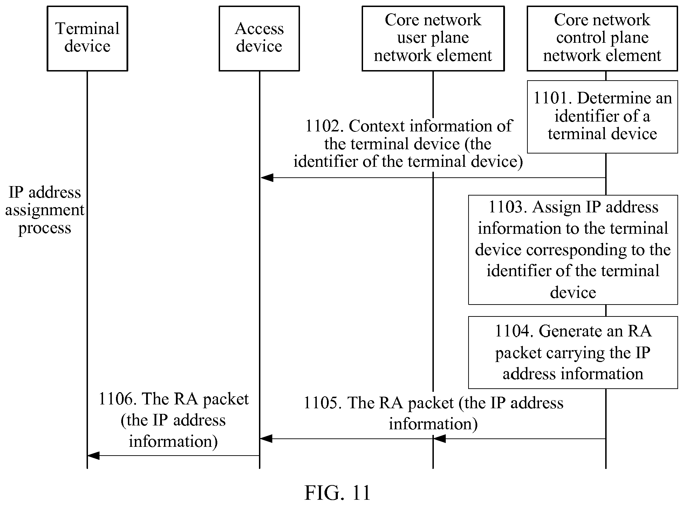

Based on the embodiment shown in FIG. 10, an embodiment of the present invention further provides an IP address assignment example. Referring to FIG. 11, in this example, in a mobile communications network, an IP address is assigned to a terminal device by using the NDP. In addition, in the mobile communications network, a core network control plane network element forwards a generated RA packet to an access device by using a core network user plane network element. An attach process and a session establishment process of the terminal device are the same as corresponding process steps in the example shown in FIG. 6 or FIG. 7. Therefore, in this example, the attach process and the session establishment process of the terminal device are not described again.

In this example, an IP address assignment process of the terminal device includes the following steps.

Step 1101. The core network control plane network element determines an identifier of the terminal device in the attach process and the session establishment process of the terminal device.

Step 1102. In the session establishment process or the attach process, the core network control plane network element adds the identifier of the terminal device to context information of the terminal device, and sends the context information of the terminal device to the access device.

Step 1103. The core network control plane network element assigns IP address information to the terminal device corresponding to the identifier of the terminal device. The IP address information is a subnet prefix.

Step 1104. The core network control plane network element generates an RA packet carrying the IP address information.

Step 1105. The core network control plane network element forwards the RA packet to the access device by using the core network user plane network element.

Step 1106. After receiving the RA packet and the context information of the terminal device, the access device sends the RA packet to the terminal device based on the identifier of the terminal device that is in the context information of the terminal device.

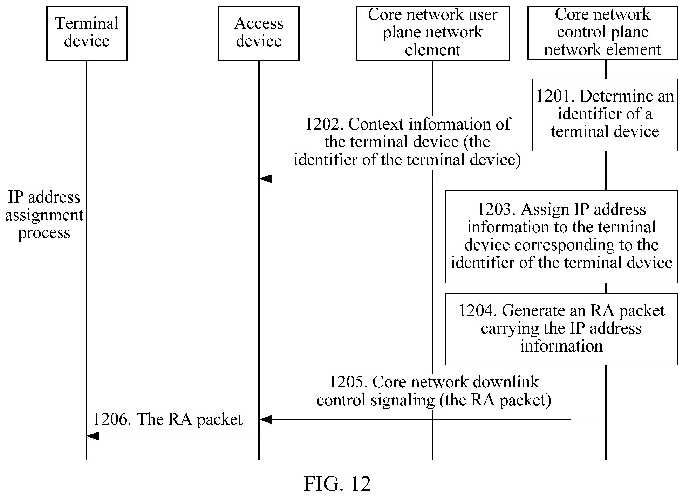

Based on the embodiment shown in FIG. 10, an embodiment of the present invention further provides an IP address assignment example. Referring to FIG. 12, in this example, in a mobile communications network, an IP address is assigned to a terminal device by using the NDP. In addition, in the mobile communications network, a core network control plane network element encapsulates a generated RA packet into core network downlink control signaling and directly sends the core network downlink control signaling to an access device. An attach process and a session establishment process of the terminal device are the same as corresponding process steps in the example shown in FIG. 11. Therefore, details are not described herein again.

In this example, an IP address assignment process of the terminal device includes the following steps.

Step 1201 to step 1204 are the same as step 1101 to step 1104 in the example shown in FIG. 11, and details are not described herein again.

Step 1205. The core network control plane network element encapsulates the generated RA packet into core network downlink control signaling and directly sends the core network downlink control signaling to the access device. The core network downlink control signaling is signaling message at a control interface between the access device and the core network control plane network element.

Step 1206. After receiving the RA packet and the context information of the terminal device, the access device sends the RA packet to the terminal device based on the identifier of the terminal device that is in the context information of the terminal device.

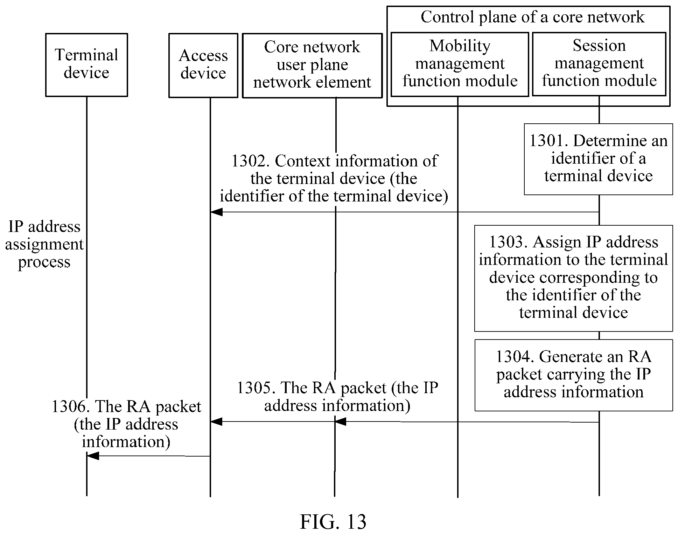

Based on the embodiment shown in FIG. 10, an embodiment of the present invention further provides an IP address assignment example. Referring to FIG. 13, in this example, the core network control plane network element in a mobile communications network includes a mobility management function module and a session management function module. In the mobile communications network, an IP address is assigned to a terminal device by using the NDP. In addition, in the mobile communications network, a core network control plane network element forwards a generated RA packet to an access device by using a core network user plane network element.

An attach process and a session establishment process of the terminal device are the same as corresponding process steps in the example shown in FIG. 8 or FIG. 9. A difference lies in that, if the session management function module assigns an identifier of the terminal device in the attach process or the session establishment process, the session management function module no longer sends the identifier of the terminal device to another device by using related information in FIG. 8 or FIG. 9. When the mobility management function module assigns an identifier of the terminal device in the attach process or the session establishment process, the mobility management function module may add the identifier of the terminal device to related information to be sent to the session management function module in the subsequent attach process or session establishment process, to send the identifier of the terminal device to the session management function module.

In this example, an IP address assignment process of the terminal device includes the following steps.

Step 1301 to step 1304 are the same as step 1101 to step 1104 in the example shown in FIG. 11, and details are not described herein again.

Step 1305. The core network control plane network element encapsulates the generated RA packet into core network downlink control signaling and forwards the core network downlink control signaling to the access device by using the mobility management function module.

Step 1306. After receiving the RA packet and the context information of the terminal device, the access device sends the RA packet to the terminal device based on the identifier of the terminal device that is in the context information of the terminal device.

Based on the embodiment shown in FIG. 10, an embodiment of the present invention further provides an IP address assignment example. Referring to FIG. 13, in this example, the core network control plane network element in a mobile communications network includes a mobility management function module and a session management function module. In the mobile communications network, an IP address is assigned to a terminal device by using the NDP. In addition, a core network control plane network element in the mobile communications network encapsulates a generated RA packet into core network downlink control signaling and forwards the core network downlink control signaling to an access device by using the mobility management function module.

In this example, an IP address assignment process of the terminal device includes the following steps.

Step 1401 to step 1404 are the same as step 1101 to step 1104 in the example shown in FIG. 11, and details are not described herein again.

Step 1405. The core network control plane network element encapsulates the generated RA packet into the core network downlink control signaling and forwards the core network downlink control signaling to the access device by using the mobility management function module.

Step 1406. After receiving the core network downlink control signaling and the context information of the terminal device, the access device sends core network downlink control signaling to the terminal device based on the identifier of the terminal device that is in the context information of the terminal device.

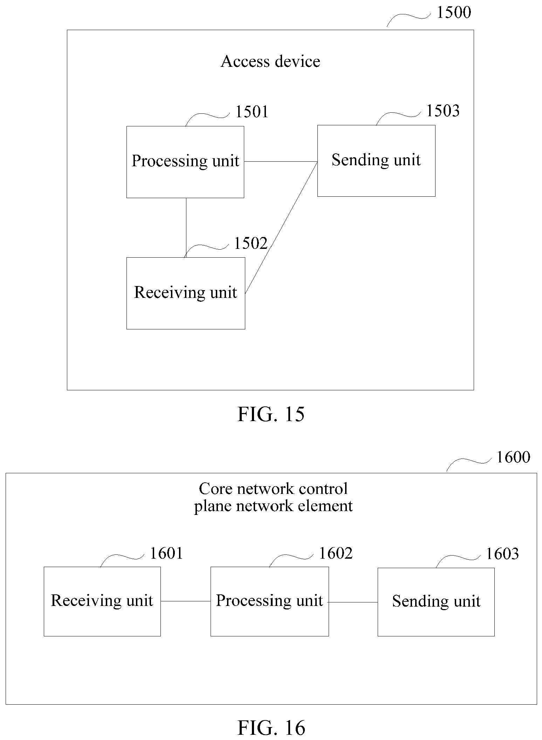

Based on the foregoing embodiments, an embodiment of the present invention further provides an access device 1500. The access device is applied to the mobile communications network shown in FIG. 1 or FIG. 2, and is configured to implement the IP address assignment method shown in FIG. 3. Referring to FIG. 15, the access device 1500 includes a processing unit 1501, a receiving unit 1502, and a sending unit 1503.

The processing unit 1501 is configured to determine an identifier of a terminal device.

The receiving unit 1502 is configured to receive an address assignment request packet from the terminal device.

The sending unit 1503 is configured to send the address assignment request packet and the identifier of the terminal device to a core network control plane network element.

The receiving unit 1502 is further configured to receive an address assignment response packet from the core network control plane network element, where the address assignment response packet includes IP address information assigned by the core network control plane network element to the terminal device.

The sending unit 1503 is further configured to send the address assignment response packet to the terminal device.

Optionally, the receiving unit 1502 is further configured to receive the identifier of the terminal device from the core network control plane network element.

The processing unit 1501 is specifically configured to determine the identifier of the terminal device that is received by the receiving unit 1502.

Optionally, when receiving the identifier of the terminal device from the core network control plane network element, the receiving unit 1502 is specifically configured to:
receive the identifier of the terminal device from the core network control plane network element in a session establishment process of the terminal device; or
receive the identifier of the terminal device from the core network control plane network element in an attach process of the terminal device.

Optionally, the address assignment request packet is a Dynamic Host Configuration Protocol DHCP obtaining request packet or a router request RS packet; and
the address assignment response packet is a DHCP obtaining response packet or a router advertisement RA packet.

Optionally, the processing unit 1501 is further configured to encapsulate the identifier of the terminal device into the address assignment request packet. When sending the address assignment request packet and the identifier of the terminal device to the core network control plane network element, the sending unit 1503 is specifically configured to forward, by using a core network user plane network element, an address assignment request packet obtained after encapsulation to the core network control plane network element.

Alternatively, the processing unit 1501 is further configured to encapsulate the address assignment request packet and the identifier of the terminal device into core network uplink control signaling. When sending the address assignment request packet and the identifier of the terminal device to the core network control plane network element, the sending unit 1503 is specifically configured to send the core network uplink control signaling to the core network control plane network element.

Optionally, when receiving the address assignment response packet from the core network control plane network element, the receiving unit 1502 is specifically configured to:
receive the address assignment response packet forwarded by the core network control plane network element by using a core network user plane network element; or
receive core network downlink control signaling from the core network control plane network element, where the core network downlink control signaling carries the address assignment response packet.

Optionally, the sending unit 1503 is further configured to:
send tunnel information and/or a network identifier to the core network control plane network element, where the tunnel information is information about a tunnel that is between the access device 1500 and a core network user plane network element and that serves the terminal device, and the network identifier is an identifier of a network that the terminal device requests to access.

When sending the address assignment response packet to the terminal device, the sending unit 1503 is specifically configured to:
send the address assignment response packet to the terminal device based on at least one or a combination of the following included in the address assignment response packet: the identifier of the terminal device, the tunnel information, and the network identifier.

Optionally, the core network control plane network element includes a session management function module, and the sending unit 1503 is further configured to:
send an identifier of the session management function module to the core network control plane network element.

Optionally, the receiving unit 1502 is further configured to receive an indication message from the core network control plane network element before receiving the address assignment request packet from the terminal device.

The processing unit 1501 is further configured to control the sending unit 1503 to send a subsequently received packet to the core network control plane network element based on the indication message, where the packet includes the address assignment request packet.

This embodiment of the present invention provides an access device. After determining the identifier of the terminal device, the access device sends, to the core network control plane network element in the mobile communications network, both the identifier of the terminal device and the address assignment request packet that is sent by the terminal device, so that the core network control plane network element assigns the IP address information to the terminal device corresponding to the identifier of the terminal device. In this way, after assigning the IP address information, the core network control plane network element can determine a correspondence between the IP address information and the identifier of the terminal device. Therefore, the core network control plane network element can accurately assign an IP address to the terminal device, and can further perform policy control based on the IP address of the terminal device, so that the terminal device can access an external data network.

Based on the foregoing embodiments, an embodiment of the present invention further provides a core network control plane network element 1600. The core network control plane network element is applied to the mobile communications network shown in FIG. 1 or FIG. 2, and is configured to implement the IP address assignment method shown in FIG. 3. Referring to FIG. 16, the core network control plane network element 1600 includes a receiving unit 1601, a processing unit 1602, and a sending unit 1603.

The receiving unit 1601 is configured to receive an address assignment request packet and an identifier of the terminal device from an access device.

The processing unit 1602 is configured to assign IP address information to the terminal device.

The sending unit 1603 is configured to send an address assignment response packet to the access device, where the address assignment response packet carries the IP address information.

Optionally, the sending unit 1603 is further configured to:
send the identifier of the terminal device to the access device before the receiving unit 1601 receives the address assignment request packet and the identifier of the terminal device from the access device.

Optionally, when sending the identifier of the terminal device to the access device, the sending unit 1603 is specifically configured to:
send the identifier of the terminal device to the access device in a session establishment process of the terminal device; or
send the identifier of the terminal device to the access device in an attach process of the terminal device.

Optionally, the address assignment request packet is a Dynamic Host Configuration Protocol DHCP obtaining request packet or a router request RS packet; and
the address assignment response packet is a DHCP obtaining response packet or a router advertisement RA packet.

Optionally, when receiving the address assignment request packet and the identifier of the terminal device from the access device, the receiving unit 1601 is specifically configured to:
receive an address assignment request packet that is obtained after encapsulation and that is forwarded by the access device by using a core network user plane network element, where the address assignment request packet obtained after encapsulation includes the identifier of the terminal device; or
receive core network uplink control signaling from the access device, where the core network uplink control signaling includes the address assignment request packet and the identifier of the terminal device.

Optionally, when sending the address assignment response packet to the access device, the sending unit 1603 is specifically configured to forward the address assignment response packet to the access device by using a core network user plane network element.

Alternatively, the processing unit 1602 is further configured to encapsulate the address assignment response packet into core network downlink control signaling. When sending the address assignment response packet to the access device, the sending unit 1603 is specifically configured to send the core network downlink control signaling to the access device.

Optionally, the address assignment response packet further includes the identifier of the terminal device.

Optionally, the receiving unit 1601 is further configured to:
receive tunnel information and/or a network identifier from the access device, where the tunnel information is information about a tunnel that is between the access device and a core network user plane network element and that serves the terminal device, and the network identifier is an identifier of a network that the terminal device requests to access.

The address assignment response packet further includes the tunnel information and/or the network identifier sent by the access device.

Optionally, the core network control plane network element 1600 includes a session management function module. The receiving unit 1601 is further configured to receive an identifier of the session management function module from the access device.

Optionally, the sending unit 1603 is further configured to send an indication message to the access device before the receiving unit 1601 receives the address assignment request packet and the identifier of the terminal device, where the indication message is used to instruct the access device to send a subsequently received packet to the core network control plane network element 1600, and the packet includes the address assignment request packet.

This embodiment of the present invention provides a core network control plane network element. After receiving the identifier of the terminal device and the address assignment request packet that are sent by the access device, the core network control plane network element assigns the IP address information to the terminal device corresponding to the identifier of the terminal device. In this way, after assigning the IP address information, the core network control plane network element can determine a correspondence between the IP address information and the identifier of the terminal device. Therefore, the core network control plane network element can accurately assign an IP address to the terminal device, and can further perform policy control based on the IP address of the terminal device, so that the terminal device can access an external data network.

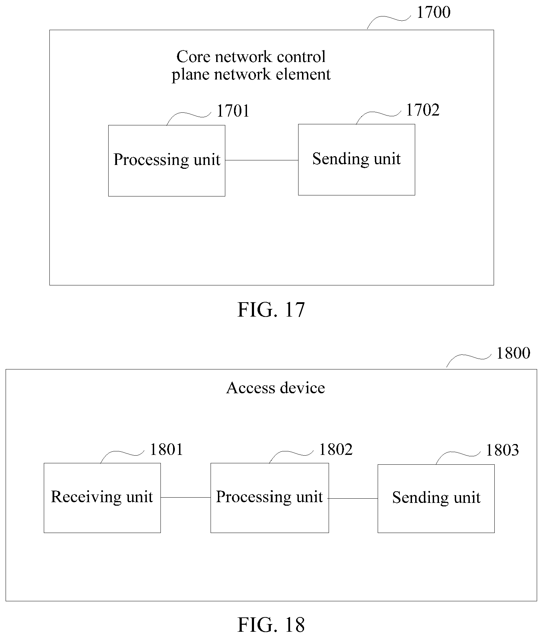

Based on the foregoing embodiments, an embodiment of the present invention further provides a core network control plane network element 1700. The core network control plane network element is applied to the mobile communications network shown in FIG. 1 or FIG. 2, and is configured to implement the IP address assignment method shown in FIG. 10. Referring to FIG. 17, the core network control plane network element 1700 includes a processing unit 1701 and a sending unit 1702.

The processing unit 1701 is configured to: determine an identifier of a terminal device and assign IP address information to the terminal device.

The sending unit 1702 is configured to send an address assignment response packet and the identifier of the terminal device to an access device serving the terminal device, where the address assignment response packet includes the IP address information.

Optionally, when sending the identifier of the terminal device to the access device, the sending unit 1702 is specifically configured to:
send, to the access device, context information of the terminal device that carries the identifier of the terminal device.

Optionally, the context information further includes any one or a combination of the following: the IP address information, tunnel information, and a network identifier. The tunnel information is information about a tunnel that is between the access device and a core network user plane network element and that serves the terminal device, and the network identifier is an identifier of a network that the terminal device requests to access.

Optionally, when sending the address assignment response packet to the access device, the sending unit 1702 is specifically configured to: forward the address assignment response packet to the access device by using a core network user plane network element.

Alternatively, the processing unit 1701 is further configured to encapsulate the address assignment response packet into core network downlink control signaling. When sending the address assignment response packet to the access device, the sending unit 1702 is specifically configured to send the core network downlink control signaling to the access device.

Optionally, the address assignment response packet includes at least one or a combination of the following: the identifier of the terminal device, tunnel information, and a network identifier. The tunnel information is information about a tunnel that is between the access device and a core network user plane network element and that serves the terminal device, and the network identifier is an identifier of a network that the terminal device requests to access.

Optionally, the core network control plane network element 1700 includes a session management function module.

This embodiment of the present invention provides a core network control plane network element. After determining an identifier of a terminal device, the core network control plane network element assigns IP address information to the terminal device corresponding to the identifier of the terminal device. In this way, after assigning the IP address information, the core network control plane network element can determine a correspondence between the IP address information and the identifier of the terminal device. Therefore, the core network control plane network element can accurately assign an IP address to the terminal device, and can further perform policy control based on the IP address of the terminal device, so that the terminal device can access an external data network.

Based on the foregoing embodiments, an embodiment of the present invention further provides an access device 1800. The access device is applied to the mobile communications network shown in FIG. 1 or FIG. 2, and is configured to implement the IP address assignment method shown in FIG. 10. Referring to FIG. 18, the access device 1800 includes a receiving unit 1801, a processing unit 1802, and a sending unit 1803.

The receiving unit 1801 is configured to receive an address assignment response packet and an identifier of a terminal device from a core network control plane network element, where the address assignment response packet includes IP address information assigned by the core network control plane network element to the terminal device corresponding to the identifier of the terminal device.

The processing unit 1802 is configured to control the sending unit 1803 to send the address assignment response packet to the terminal device based on the identifier of the terminal device.

The sending unit 1803 is configured to send the address assignment response packet to the terminal device.

Optionally, when receiving the identifier of the terminal device from the core network control plane network element, the receiving unit 1801 is specifically configured to:
receive, from the core network control plane network element, context information of the terminal device that carries the identifier of the terminal device.

Optionally, the context information of the terminal device further includes any one or a combination of the following: the IP address information, tunnel information, and a network identifier. The tunnel information is information about a tunnel that is between the access device 1800 and a core network user plane network element and that serves the terminal device, and the network identifier is an identifier of a network that the terminal device requests to access.

Optionally, when receiving the address assignment response packet from the core network control plane network element, the receiving unit 1801 is specifically configured to:
receive the address assignment response packet forwarded by the core network control plane network element by using a core network user plane network element; or
receive core network downlink control signaling from the core network control plane network element, where the core network downlink control signaling carries the address assignment response packet.

Optionally, the address assignment response packet includes at least one or a combination of the following: the identifier of the terminal device, tunnel information, and a network identifier. The tunnel information is information about a tunnel that is between the access device 1800 and a core network user plane network element and that serves the terminal device, and the network identifier is an identifier of a network that the terminal device requests to access.

Optionally, the core network control plane network element includes a session management function module.

This embodiment of the present invention provides an access device. After receiving the address assignment response packet and the identifier of the terminal device that are sent by the core network control plane network element, the access device sends the address assignment response packet to the terminal device based on the identifier of the terminal device, where the address assignment response packet includes the IP address information assigned by the core network control plane network element to the terminal device. In this way, the access device can accurately send the IP address information of the terminal device to the terminal device, thereby improving efficiency of assigning an IP address to the terminal device.

It should be noted that the unit division in the embodiments of the present invention is an example, and is merely logical function division. There may be another division manner in an actual implementation. Functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some part of the technical solutions may be implemented in the form of a software product. The software product is stored in a storage medium and includes several instructions for instructing a computer device (which may be a personal computer, a server, a network device, or the like) or a processor (processor) to perform all or some of the steps of the methods described in the embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

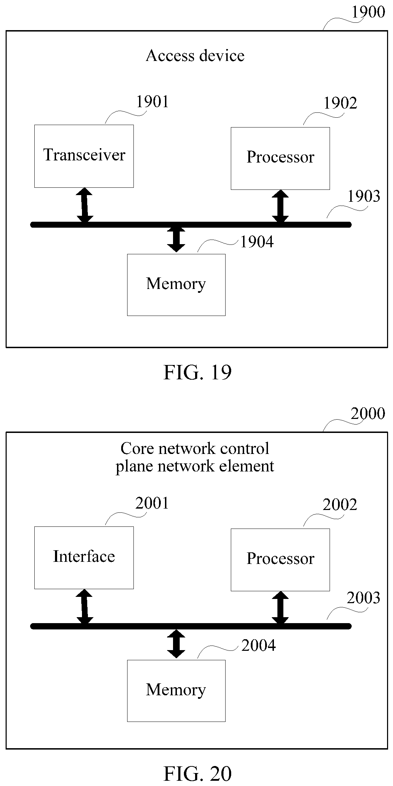

Based on the foregoing embodiments, an embodiment of the present invention further provides an access device 1900. The access device is applied to the mobile communications network shown in FIG. 1 or FIG. 2. The access device is configured to implement the IP address assignment method shown in FIG. 3, and has a function implemented by the access device 1500 shown in FIG. 15. Referring to FIG. 19, the access device 1900 includes a transceiver 1901, a processor 1902, a bus 1903, and a memory 1904.

The transceiver 1901, the processor 1902, and the memory 1904 are connected to each other by using the bus 1903. The bus 1903 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 19, but this does not mean that there is only one bus or only one type of bus.

The transceiver 1901 is configured to communicate and interact with another device in the mobile communications network.

The processor 1902 is configured to implement the IP address assignment method on an access device side shown in FIG. 3, including:
determining an identifier of a terminal device;
sending an address assignment request packet and the identifier of the terminal device to a core network control plane network element after receiving the address assignment request packet from the terminal device; and
receiving an address assignment response packet from the core network control plane network element, and sending the address assignment response packet to the terminal device, where the address assignment response packet includes IP address information assigned by the core network control plane network element to the terminal device.

The memory 1904 is configured to store a program and the like. Specifically, the program may include program code, and the program code includes a computer operation instruction. The memory 1904 may include a RAM, and may further include a non-volatile memory (non-volatile memory), for example, at least one magnetic disk memory. The processor 1902 executes the application program stored in the memory 1904 to implement the foregoing functions, so as to implement the IP address assignment method shown in FIG. 3.

This embodiment of the present invention provides an access device. After determining the identifier of the terminal device, the access device sends, to the core network control plane network element in the mobile communications network, both the identifier of the terminal device and the address assignment request packet that is sent by the terminal device, so that the core network control plane network element assigns the IP address information to the terminal device corresponding to the identifier of the terminal device. In this way, after assigning the IP address information, the core network control plane network element can determine a correspondence between the IP address information and the identifier of the terminal device. Therefore, the core network control plane network element can accurately assign an IP address to the terminal device, and can further perform policy control based on the IP address of the terminal device, so that the terminal device can access an external data network.

Based on the foregoing embodiments, an embodiment of the present invention further provides a core network control plane network element 2000. The core network control plane network element is applied to the mobile communications network shown in FIG. 1 or FIG. 2. The core network control plane network element is configured to implement the IP address assignment method shown in FIG. 3, and has a function implemented by the core network control plane network element 1600 shown in FIG. 16. Referring to FIG. 20, the core network control plane network element 2000 includes an interface 2001, a processor 2002, a bus 2003, and a memory 2004.

The interface 2001, the processor 2002, and the memory 2004 are connected to each other by using the bus 2003. The bus 2003 may be a PCI bus, an EISA bus, or the like. The bus may be classified into an address bus, a data bus, a control bus, and the like. For ease of representation, only one thick line is used to represent the bus in FIG. 20, but this does not mean that there is only one bus or only one type of bus.

The interface 2001 is configured to communicate and interact with another device in the mobile communications network.

The processor 2002 is configured to implement the IP address assignment method on a core network control plane network element side shown in FIG. 3, including:
assigning IP address information to a terminal device after receiving an address assignment request packet and an identifier of the terminal device from an access device; and
sending an address assignment response packet to the access device, where the address assignment response packet carries the IP address information.

The memory 2004 is configured to store a program and the like. Specifically, the program may include program code, and the program code includes a computer operation instruction. The memory 2004 may include a RAM, and may further include a non-volatile memory (non-volatile memory), for example, at least one magnetic disk memory. The processor 2002 executes the application program stored in the memory 2004 to implement the foregoing functions, so as to implement the IP address assignment method shown in FIG. 3.

This embodiment of the present invention provides a core network control plane network element. After receiving the identifier of the terminal device and the address assignment request packet that are sent by the access device, the core network control plane network element assigns the IP address information to the terminal device corresponding to the identifier of the terminal device. In this way, after assigning the IP address information, the core network control plane network element can determine a correspondence between the IP address information and the identifier of the terminal device. Therefore, the core network control plane network element can accurately assign an IP address to the terminal device, and can further perform policy control based on the IP address of the terminal device, so that the terminal device can access an external data network.

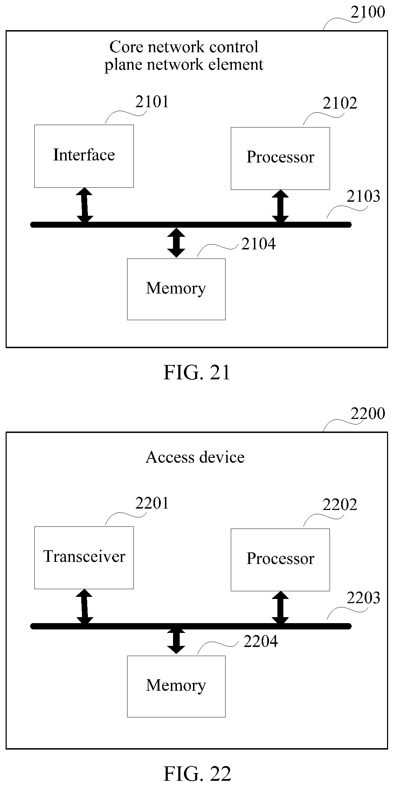

Based on the foregoing embodiments, an embodiment of the present invention further provides a core network control plane network element 2100. The core network control plane network element is applied to the mobile communications network shown in FIG. 1 or FIG. 2. The core network control plane network element is configured to implement the IP address assignment method shown in FIG. 10, and has a function implemented by the core network control plane network element 1700 shown in FIG. 17. Referring to FIG. 21, the core network control plane network element 2100 includes an interface 2101, a processor 2102, a bus 2103, and a memory 2104.

The interface 2101, the processor 2102, and the memory 2104 are connected to each other by using the bus 2103. The bus 2103 may be a PCI bus, an EISA bus, or the like. The bus may be classified into an address bus, a data bus, a control bus, and the like. For ease of representation, only one thick line is used to represent the bus in FIG. 21, but this does not mean that there is only one bus or only one type of bus.

The interface 2101 is configured to communicate and interact with another device in the mobile communications network.

The processor 2102 is configured to implement the IP address assignment method on a core network control plane network element side shown in FIG. 10, including:
assigning IP address information to a terminal device after determining an identifier of the terminal device; and
sending an address assignment response packet and the identifier of the terminal device to an access device serving the terminal device, where the address assignment response packet includes the IP address information.

The memory 2104 is configured to store a program and the like. Specifically, the program may include program code, and the program code includes a computer operation instruction. The memory 2104 may include a RAM, and may further include a non-volatile memory (non-volatile memory), for example, at least one magnetic disk memory. The processor 2102 executes the application program stored in the memory 2104 to implement the foregoing functions, so as to implement the IP address assignment method shown in FIG. 10.

This embodiment of the present invention provides a core network control plane network element. After determining an identifier of a terminal device, the core network control plane network element assigns IP address information to the terminal device corresponding to the identifier of the terminal device. In this way, after assigning the IP address information, the core network control plane network element can determine a correspondence between the IP address information and the identifier of the terminal device. Therefore, the core network control plane network element can accurately assign an IP address to the terminal device, and can further perform policy control based on the IP address of the terminal device, so that the terminal device can access an external data network.

Based on the foregoing embodiments, an embodiment of the present invention further provides an access device 2200. The access device is applied to the mobile communications network shown in FIG. 1 or FIG. 2. The access device is configured to implement the IP address assignment method shown in FIG. 10, and has a function implemented by the access device 1800 shown in FIG. 18. Referring to FIG. 22, the access device 2200 includes a transceiver 2201, a processor 2202, a bus 2203, and a memory 2204.

The transceiver 2201, the processor 2202, and the memory 2204 are connected to each other by using the bus 2203. The bus 2203 may be a PCI bus, an EISA bus, or the like. The bus may be classified into an address bus, a data bus, a control bus, and the like. For ease of representation, only one thick line is used to represent the bus in FIG. 22, but this does not mean that there is only one bus or only one type of bus.

The transceiver 2201 is configured to communicate and interact with another device in the mobile communications network.

The processor 2202 is configured to implement the IP address assignment method on an access device side shown in FIG. 10, including:
receiving an address assignment response packet and an identifier of a terminal device from a core network control plane network element, where the address assignment response packet includes IP address information assigned by the core network control plane network element to the terminal device corresponding to the identifier of the terminal device; and
sending the address assignment response packet to the terminal device based on the identifier of the terminal device.

The memory 2204 is configured to store a program and the like. Specifically, the program may include program code, and the program code includes a computer operation instruction. The memory 2204 may include a RAM, and may further include a non-volatile memory (non-volatile memory), for example, at least one magnetic disk memory. The processor 2202 executes the application program stored in the memory 2204 to implement the foregoing functions, so as to implement the IP address assignment method shown in FIG. 10.

This embodiment of the present invention provides an access device. After receiving the address assignment response packet and the identifier of the terminal device that are sent by the core network control plane network element, the access device sends the address assignment response packet to the terminal device based on the identifier of the terminal device, where the address assignment response packet includes the IP address information assigned by the core network control plane network element to the terminal device. In this way, the access device can accurately send the IP address information of the terminal device to the terminal device, thereby improving efficiency of assigning an IP address to the terminal device.

In conclusion, the embodiments of the present invention provide an IP address assignment method and an apparatus. In the method, after determining the identifier of the terminal device, the core network control plane network element in the mobile communications network assigns the IP address information to the terminal device corresponding to the identifier of the terminal device. In this way, after assigning the IP address information, the core network control plane network element can determine the correspondence between the IP address information and the identifier of the terminal device. Therefore, the core network control plane network element can accurately assign an IP address to the terminal device, and can further perform policy control based on the IP address of the terminal device, so that the terminal device can access an external data network.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, a person skilled in the art can make changes and modifications to these embodiments once they learn the basic inventive concept. Therefore, the following claims are intended to be construed as to cover the preferred embodiments and all changes and modifications falling within the scope of the present invention.

Obviously, a person skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. An Internet Protocol IP address assignment method, comprising:
determining, by an access device, an identifier of a terminal device;
sending, by the access device, an address assignment request packet and the identifier of the terminal device to a core network control plane network element after receiving the address assignment request packet from the terminal device; and
receiving, by the access device, an address assignment response packet from the core network control plane network element, and sending the address assignment response packet to the terminal device, wherein the address assignment response packet comprises IP address information assigned by the core network control plane network element to the terminal device.

2. The method according to claim 1, wherein the determining, by an access device, an identifier of a terminal device comprises:
receiving, by the access device, the identifier of the terminal device from the core network control plane network element.

3. The method according to claim 2, wherein the receiving, by the access device, the identifier of the terminal device from the core network control plane network element comprises:
receiving, by the access device, the identifier of the terminal device from the core network control plane network element in a session establishment process of the terminal device; or
receiving, by the access device, the identifier of the terminal device from the core network control plane network element in an attach process of the terminal device.

4. The method according to any one of claims 1 to 3, wherein
the address assignment request packet is a Dynamic Host Configuration Protocol DHCP obtaining request packet or a router solicitation RS packet; and
the address assignment response packet is a DHCP obtaining response packet or a router advertisement RA packet.

5. The method according to any one of claims 1 to 4, wherein the sending, by the access device, an address assignment request packet and the identifier of the terminal device to a core network control plane network element comprises:
encapsulating, by the access device, the identifier of the terminal device into the address assignment request packet, and forwarding, by using a core network user plane network element, an address assignment request packet obtained after encapsulation to the core network control plane network element; or
encapsulating, by the access device, the address assignment request packet and the identifier of the terminal device into core network uplink control signaling, and sending the core network uplink control signaling to the core network control plane network element.

6. The method according to any one of claims 1 to 4, wherein the receiving, by the access device, an address assignment response packet from the core network control plane network element comprises:
receiving, by the access device, the address assignment response packet forwarded by the core network control plane network element by using a core network user plane network element; or
receiving, by the access device, core network downlink control signaling from the core network control plane network element, wherein the core network downlink control signaling carries the address assignment response packet.

7. The method according to any one of claims 1 to 4, wherein the method further comprises:
sending, by the access device, tunnel information and/or a network identifier to the core network control plane network element, wherein the tunnel information is information about a tunnel that is between the access device and a core network user plane network element and that serves the terminal device, and the network identifier is an identifier of a network that the terminal device requests to access; and
the sending, by the access device, the address assignment response packet to the terminal device comprises:
sending, by the access device, the address assignment response packet to the terminal device based on at least one or a combination of the following comprised in the address assignment response packet: the identifier of the terminal device, the tunnel information, and the network identifier.

8. The method according to any one of claims 1 to 7, wherein the core network control plane network element comprises a session management function module, and the method further comprises:
sending, by the access device, an identifier of the session management function module to the core network control plane network element.

9. The method according to any one of claims 1 to 8, wherein before the access device receives the address assignment request packet from the terminal device, the method further comprises:
receiving, by the access device, an indication message from the core network control plane network element; and
sending, by the access device, a subsequently received packet to the core network control plane network element based on the indication message, wherein the packet comprises the address assignment request packet.

10. An Internet Protocol IP address assignment method, comprising:
assigning, by a core network control plane network element, IP address information to a terminal device after receiving an address assignment request packet and an identifier of the terminal device from an access device; and
sending, by the core network control plane network element, an address assignment response packet to the access device, wherein the address assignment response packet carries the IP address information.

11. The method according to claim 10, wherein the address assignment response packet further comprises the identifier of the terminal device.

12. An Internet Protocol IP address assignment method, comprising:
assigning, by a core network control plane network element, IP address information to a terminal device after determining an identifier of the terminal device; and
sending, by the core network control plane network element, an address assignment response packet and the identifier of the terminal device to an access device serving the terminal device, wherein the address assignment response packet comprises the IP address information.

13. The method according to claim 12, wherein the sending, by the core network control plane network element, the identifier of the terminal device to an access device comprises:
sending, by the core network control plane network element to the access device, context information of the terminal device that carries the identifier of the terminal device.

14. The method according to claim 13, wherein the context information further comprises any one or a combination of the following: the IP address information, tunnel information, and a network identifier, wherein the tunnel information is information about a tunnel that is between the access device and a core network user plane network element and that serves the terminal device, and the network identifier is an identifier of a network that the terminal device requests to access.

15. An Internet Protocol IP address assignment method, comprising:
receiving, by an access device, an address assignment response packet and an identifier of a terminal device from a core network control plane network element, wherein the address assignment response packet comprises IP address information assigned by the core network control plane network element to the terminal device corresponding to the identifier of the terminal device; and
sending, by the access device, the address assignment response packet to the terminal device based on the identifier of the terminal device.

16. An access device, comprising:
a processing unit, configured to determine an identifier of a terminal device;
a receiving unit, configured to receive an address assignment request packet from the terminal device; and
a sending unit, configured to send the address assignment request packet and the identifier of the terminal device to a core network control plane network element, wherein
the receiving unit is further configured to receive an address assignment response packet from the core network control plane network element, wherein the address assignment response packet comprises IP address information assigned by the core network control plane network element to the terminal device; and
the sending unit is further configured to send the address assignment response packet to the terminal device.

17. The access device according to claim 16, wherein
the receiving unit is further configured to receive the identifier of the terminal device from the core network control plane network element; and
the processing unit is specifically configured to determine the identifier of the terminal device that is received by the receiving unit.

18. The access device according to claim 17, wherein when receiving the identifier of the terminal device from the core network control plane network element, the receiving unit is specifically configured to:
receive the identifier of the terminal device from the core network control plane network element in a session establishment process of the terminal device; or
receive the identifier of the terminal device from the core network control plane network element in an attach process of the terminal device.

19. The access device according to any one of claims 16 to 18, wherein
the address assignment request packet is a Dynamic Host Configuration Protocol DHCP obtaining request packet or a router solicitation RS packet; and
the address assignment response packet is a DHCP obtaining response packet or a router advertisement RA packet.

20. The access device according to any one of claims 16 to 19, wherein
the processing unit is further configured to encapsulate the identifier of the terminal device into the address assignment request packet; and when sending the address assignment request packet and the identifier of the terminal device to the core network control plane network element, the sending unit is specifically configured to forward, by using a core network user plane network element, an address assignment request packet obtained after encapsulation to the core network control plane network element; or
the processing unit is further configured to encapsulate the address assignment request packet and the identifier of the terminal device into core network uplink control signaling; and when sending the address assignment request packet and the identifier of the terminal device to the core network control plane network element, the sending unit is specifically configured to send the core network uplink control signaling to the core network control plane network element.

21. The access device according to any one of claims 16 to 19, wherein when receiving the address assignment response packet from the core network control plane network element, the receiving unit is specifically configured to:
receive the address assignment response packet forwarded by the core network control plane network element by using a core network user plane network element; or
receive core network downlink control signaling from the core network control plane network element, wherein the core network downlink control signaling carries the address assignment response packet.

22. The access device according to any one of claims 16 to 19, wherein the sending unit is further configured to:
send tunnel information and/or a network identifier to the core network control plane network element, wherein the tunnel information is information about a tunnel that is between the access device and a core network user plane network element and that serves the terminal device, and the network identifier is an identifier of a network that the terminal device requests to access; and
when sending the address assignment response packet to the terminal device, the sending unit is specifically configured to:
send the address assignment response packet to the terminal device based on at least one or a combination of the following comprised in the address assignment response packet: the identifier of the terminal device, the tunnel information, and the network identifier.

23. The access device according to any one of claims 16 to 22, wherein the core network control plane network element comprises a session management function module, and the sending unit is further configured to:
send an identifier of the session management function module to the core network control plane network element.

24. The access device according to any one of claims 16 to 23, wherein
the receiving unit is further configured to receive an indication message from the core network control plane network element before receiving the address assignment request packet from the terminal device; and
the processing unit is further configured to control the sending unit to send a subsequently received packet to the core network control plane network element based on the indication message, wherein the packet comprises the address assignment request packet.

25. A core network control plane network element, comprising:
a receiving unit, configured to receive an address assignment request packet and an identifier of a terminal device from an access device;
a processing unit, configured to assign IP address information to the terminal device; and
a sending unit, configured to send an address assignment response packet to the access device, wherein the address assignment response packet carries the IP address information.

26. The core network control plane network element according to claim 25, wherein the address assignment response packet further comprises the identifier of the terminal device.

27. A core network control plane network element, comprising:
a processing unit, configured to: determine an identifier of a terminal device, and assign IP address information to the terminal device; and
a sending unit, configured to send an address assignment response packet and the identifier of the terminal device to an access device serving the terminal device, wherein the address assignment response packet comprises the IP address information.

28. The core network control plane network element according to claim 27, wherein when sending the identifier of the terminal device to the access device, the sending unit is specifically configured to:
send, to the access device, context information of the terminal device that carries the identifier of the terminal device.

29. The core network control plane network element according to claim 28, wherein the context information further comprises any one or a combination of the following: the IP address information, tunnel information, and a network identifier, wherein the tunnel information is information about a tunnel that is between the access device and a core network user plane network element and that serves the terminal device, and the network identifier is an identifier of a network that the terminal device requests to access.

30. An access device, comprising:
a receiving unit, configured to receive an address assignment response packet and an identifier of a terminal device from a core network control plane network element, wherein the address assignment response packet comprises IP address information assigned by the core network control plane network element to the terminal device corresponding to the identifier of the terminal device;
a processing unit, configured to control a sending unit to send the address assignment response packet to the terminal device based on the identifier of the terminal device; and
the sending unit, configured to send the address assignment response packet to the terminal device.
